(19) Europäisches Patentamt
European Patent Office
Office européen des brevets

(11) **EP 4 760 847 A1**

(12) **EUROPEAN PATENT APPLICATION**
published in accordance with Art. 153(4) EPC

(43) Date of publication:
**17.06.2026 Bulletin 2026/25**

(21) Application number: **25835863.9**

(22) Date of filing: **16.05.2025**

(51) International Patent Classification (IPC):
***H01M 10/0525*** *(2010.01)* ***H01M 4/525*** *(2010.01)*
***H01M 4/36*** *(2006.01)*

(52) Cooperative Patent Classification (CPC):
**H01M 4/36; H01M 4/525; H01M 10/0525;**
Y02E 60/10

(86) International application number:
**PCT/CN2025/095444**

(87) International publication number:
**WO 2026/011960 (15.01.2026 Gazette 2026/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.07.2024 CN 202410927544**

(71) Applicant: **Contemporary Amperex Technology Co., Limited**
**Ningde, Fujian 352100 (CN)**

(72) Inventors:
- **YAN, Qiuming**
  **Ningde, Fujian 352100 (CN)**
- **LI, Sheng**
  **Ningde, Fujian 352100 (CN)**
- **YE, Xinde**
  **Ningde, Fujian 352100 (CN)**
- **NI, Huan**
  **Ningde, Fujian 352100 (CN)**
- **ZHONG, Hua**
  **Ningde, Fujian 352100 (CN)**

(74) Representative: **Lorenz Seidler Gossel Part. mbB**
**Widenmayerstr. 23**
**80538 München (DE)**

(54) **SECONDARY BATTERY, POSITIVE ELECTRODE ACTIVE MATERIAL, AND ELECTRIC DEVICE**

(57) A secondary battery, a positive electrode active material, and a power consuming apparatus are provided. The secondary battery includes a positive electrode plate, where the positive electrode plate includes a positive electrode active material, the positive electrode active material includes secondary particles, and the secondary particle is an agglomerated particle including a plurality of primary particles; and the primary particles include a positive electrode active substance; the secondary particles include oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, where $15° \leq \alpha 1 \leq 45°$, and $F1 \geq 60\%$.

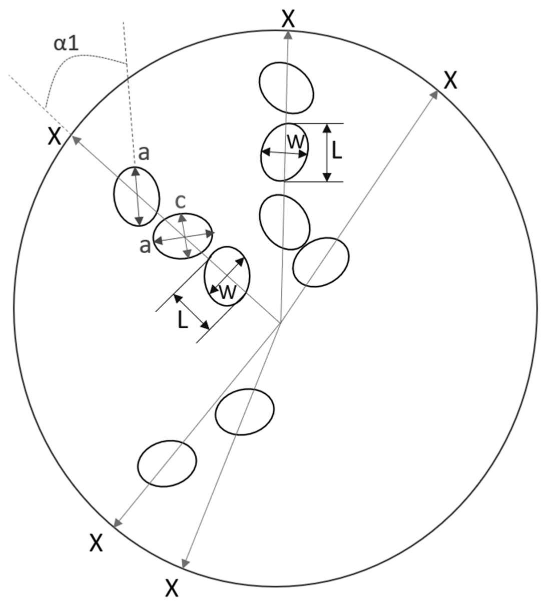


FIG. 1

EP 4 760 847 A1

## Description

### CROSS-REFERENCE TO RELATED APPLICATIONS

The present application claims priority to Chinese Patent Application No. CN2024109275446 filed on July 11, 2024 and entitled "SECONDARY BATTERY, POSITIVE ELECTRODE ACTIVE MATERIAL, AND POWER CONSUMING APPARATUS", which is incorporated herein by reference in its entirety.

### TECHNICAL FIELD

The present application relates to the technical field of batteries, and further, to a secondary battery, a positive electrode active material, and a power consuming apparatus.

### BACKGROUND

The statement herein only provides background information related to the present application and does not necessarily constitute the prior art.

In recent years, with the technical development of secondary batteries, secondary batteries represented by lithium-ion batteries are widely applied to a plurality of fields such as electric tools, electric bicycles, electric motorcycles, electric vehicles, military equipment, and aerospace, and are also widely applied to energy storage power systems such as hydroelectric power plants, thermal power plants, wind power plants, and solar power plants. The lithium-ion batteries occupy an important position in new energy automobiles. To satisfy requirements on the endurance mileage, the dynamics performance, and the service life of new energy automobiles, it is necessary to comprehensively improve the energy density, the dynamics performance, and the cycle life of the lithium-ion batteries.

### SUMMARY

In view of the foregoing problem, the present application provides a secondary battery, a positive electrode active material, and a power consuming apparatus. The secondary battery has a high energy density, a good dynamics performance, and a long cycle life together.

According to a first aspect, the present application provides a secondary battery, including a positive electrode plate, where the positive electrode plate includes a positive electrode active material, the positive electrode active material includes secondary particles, and the secondary particle is an agglomerate including a plurality of primary particles; and the primary particles include a positive electrode active substance;

> in any one of the secondary particles, a direction from a center of the secondary particle to a surface is denoted as an X direction; an X direction passing through a center of any one of the primary particles is denoted as a longitudinal direction; and in any one of the primary particles, a longest axis of the primary particle is denoted as an a-axis; and the secondary particles include oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, where $15° \leq \alpha 1 \leq 45°$, and $F1 \geq 60\%$.

The positive electrode active material includes oriented secondary particles. The oriented secondary particles include a particular quantity of primary particles whose a-axes form angles $\alpha 1$ with corresponding longitudinal directions. In one aspect, controlling the quantity proportion F1 of the primary particles forming the foregoing angles $\alpha 1$ to the oriented secondary particle to fall within the foregoing range helps inhibit the electrolyte solution from infiltrating into the grain boundaries of the secondary particle, helps inhibit the side reaction between the electrolyte solution and the surface of the positive electrode active substance, and can improve the actual gram capacity and the cycle life of the positive electrode active material. In the other aspect, controlling the angles $\alpha 1$ to fall within the foregoing angle range can further implement a relatively short active ion de-intercalation path, helps promote rapid de-intercalation of the active ions in the positive electrode active material during a charge/discharge process, can improve an actual energy density of the secondary battery, and can enable the secondary battery to have a good dynamics performance.

In some implementations, the angle $\alpha 1$ is obtained in the following manner: in a cross section passing through a center of the oriented secondary particle, a direction from the center of the oriented secondary particle to a surface of the oriented secondary particle is used as an X direction; an X direction passing through a center of a cross section of a primary particle is used as a longitudinal direction corresponding to the primary particle; a longest axis in the cross section of the primary particle is denoted as an a-axis; and the angle $\alpha 1$ is obtained according to an angle formed between the a-axis and

the corresponding longitudinal direction.

the foregoing parameter $\alpha 1$ may be statistically analyzed by using a view of the cross section passing through the center of the oriented secondary particle.

In some implementations, $F1 \geq 64\%$.

Controlling the quantity proportion (F1) of the primary particles whose a-axes form the angles $\alpha 1$ with the longitudinal directions to the oriented secondary particle to fall within the foregoing range, in one aspect, helps more effectively inhibit the electrolyte solution from infiltrating into the grain boundaries of the secondary particle, thereby more effectively inhibiting the side reaction between the electrolyte solution and the surface of the positive electrode active substance, and better improving the actual gram capacity and the cycle life of the positive electrode active material; and in the other aspect, better helps provide a relatively short active ion de-interposition path, thereby better helping improve an actual energy density and a good dynamics performance of the secondary battery.

In some implementations, a quantity proportion of the oriented secondary particles in the secondary particles is denoted as P2, satisfying $P2 \geq 60\%$.

In some implementations, $P2 \geq 75\%$.

Controlling the quantity proportion (P2) of the oriented secondary particles in the secondary particles to fall within the foregoing range helps more prominently play a comprehensive role in improving the high energy density, the dynamics performance, and the long cycle life of the secondary battery by the oriented secondary particles.

In some implementations, a length value of the primary particle along the longitudinal direction is denoted as L, a length value of the primary particle perpendicular to the longitudinal direction is denoted as W, and a ratio of L to W in the primary particle is denoted as $R_{L/W}$; and

in the oriented secondary particle, $R_{L/W}$ of the primary particles is less than or equal to 4.

Adjusting the angle $\alpha 1$ formed between the a-axis of the primary particle and the corresponding longitudinal direction can adjust the length ratio $R_{L/W}$ of the primary particle in the longitudinal direction and a transverse direction (the transverse direction is a direction perpendicular to the longitudinal direction). Further, adjusting $R_{L/W}$ to fall within the foregoing range helps accumulate the primary particles more closely in a radial direction (the X direction) of the oriented secondary particle, thereby better helping improve the energy density of the battery.

In some implementations, the value L, the value W, and the value $R_{L/W}$ are obtained in the following manner: in a cross section passing through a center of the oriented secondary particle, a direction from the center of the oriented secondary particle to a surface of the oriented secondary particle is used as an X direction; an X direction passing through a center of a cross section of a primary particle is used as a longitudinal direction corresponding to the primary particle; the value L is obtained according to the length value of the primary particle along the corresponding longitudinal direction, the value W is obtained according to a length value of the primary particle along the direction perpendicular to the corresponding longitudinal direction, and the value $R_{L/W}$ is obtained according to a ratio obtained by dividing the value L by the value W.

the foregoing parameters L, W, and $R_{L/W}$ may be analyzed statistically by using a view of the cross section passing through the center of the oriented secondary particle.

In some implementations, the positive electrode active material satisfies at least one of the following features:

in the oriented secondary particle, $R_{L/W}$ of the primary particles satisfies $0 < R_{L/W} \leq 4$; and
in the oriented secondary particle, an average value of $R_{L/W}$ of the primary particles ranges from 1.5 to 2.5.

In some implementations, the positive electrode active material satisfies at least one of the following features:

in the oriented secondary particle, $R_{L/W}$ of the primary particles satisfies $0.95 \leq R_{L/W} \leq 4$; and
in the oriented secondary particle, an average value of $R_{L/W}$ of the primary particles ranges from 1.5 to 2.0.

Adjusting one or two parameters of a range of the values of $R_{L/W}$ and the average value of $R_{L/W}$ of the primary particles in the oriented secondary particle to fall within the foregoing ranges can adjust the orientation and orientation distribution features of the primary particles, can better take into consideration both the inhibiting effect on the infiltration of the electrolyte solution and the reversible de-intercalation efficiency of the active ions, and helps better take into consideration the high energy density, the cyclic performance, and the good dynamics performance together.

In some implementations, a distance between the center and the surface of the oriented secondary particle is denoted as R; a part from the center of the oriented secondary particle to a position 2/3R away from the center is denoted as an inner layer, and a part from the position 2/3R away from the center to the surface of the oriented secondary particle is denoted as an outer layer; and

in the oriented secondary particle, an average value of $R_{L/W}$ of the inner layer is denoted as $R_{MI}$, and an average value of $R_{L/W}$ of the outer layer is denoted as $R_{MO}$, where $R_{MI} < R_{MO}$.

When the primary particles form the foregoing angles $\alpha 1$, further controlling $R_{MI} < R_{MO}$ helps more rapidly de-intercalate the active ions located on the outer layer and the outer surface of the secondary particle, and better helps improve the dynamics performance of the positive electrode active material and the battery.

In some implementations, the positive electrode active material satisfies one or more of the following features:

in the oriented secondary particle, $R_{MI} < 1.8$, and $R_{MO} \geq 1.8$; and
in the oriented secondary particle, $R_{L/W}$ of the outer layer satisfies $1.2 \leq R_{L/W} \leq 4$, and $R_{L/W}$ of the inner layer satisfies $0.95 \leq R_{L/W} \leq 2.8$.

In some implementations, the positive electrode active material satisfies one or more of the following features:

in the oriented secondary particle, $1.3 \leq R_{MI} < 1.8$, and $1.8 \leq R_{MO} \leq 2.3$; and
in the oriented secondary particle, $R_{L/W}$ of at least 80% of the primary particles in the outer layer satisfies $1.4 \leq R_{L/W} \leq 4$, and $R_{L/W}$ of at least 80% of the primary particles in the inner layer satisfies $0.95 \leq R_{L/W} \leq 2.0$.

Controlling the value of $R_{L/W}$ of the inner layer, the average value of $R_{L/W}$ of the inner layer ($R_{MI}$), the value of $R_{L/W}$ of the outer layer, and the average value of $R_{L/W}$ of the outer layer ($R_{MO}$) of the oriented secondary particle to have the foregoing combination manners can better control orientation distribution changes of the primary particles at the inner layer and the outer layer, helps better improve reversible de-intercalation efficiency of the active ions of the primary particles at the outer layer, can further take into consideration inhibition of infiltration of the electrolyte solution, and better helps take into consideration both the good cycle performance and dynamics performance.

In some implementations, in the oriented secondary particle, values of $R_{L/W}$ of the primary particles sequentially increase from the center of the oriented secondary particle to the surface of the oriented secondary particle.

Controlling $R_{L/W}$ of the primary particles in the oriented secondary particle to sequentially increase from the center to the surface can better control orientation distribution changes of the primary particles in the oriented secondary particle, helps better improve reversible de-intercalation efficiency of the active ions of the primary particles at the outer layer, can further take into consideration inhibition of infiltration of the electrolyte solution, and better helps take into consideration both the good cycle performance and dynamics performance.

In some implementations, based on a quantity of primary particles in the oriented secondary particle whose a-axes form an angle $\alpha 1$ with the longitudinal direction, an anisotropy index of the angle $\alpha 1$ is denoted as $I_{\alpha 1}$, and then $0.4 \leq I_{\alpha 1} \leq 2.5$, where
in the cross section passing through the center of the oriented secondary particle, angles $\alpha 1$ by which the a-axes deviate from corresponding longitudinal directions clockwise are denoted as positive angles, angles $\alpha 1$ by which the a-axes deviate from corresponding longitudinal directions anticlockwise are denoted as negative angles, and $I_{\alpha 1}$ is a ratio of a quantity of the positive angles to a quantity of the negative angles.

In some implementations, $0.5 \leq I_{\alpha 1} \leq 2.0$.

The foregoing parameter $I_{\alpha 1}$ may be used to further reflect distribution of orientation directions of the primary particles in the oriented secondary particle that form the angles $\alpha 1$. Controlling $I_{\alpha 1}$ to fall within the foregoing range can enable the primary particles that form the angles $\alpha 1$ to have relatively disordered orientation, thereby better helping inhibit the electrolyte solution from infiltrating into the grain boundaries of the secondary particle, and better helping improve the actual gram capacity and the cycle life of the positive electrode active material.

In some implementations, the positive electrode active material satisfies one or more of the following features:

$D_v50$ of the positive electrode active material ranges from 8 μm to 11 μm;
diameters of at least 80% of the primary particles in the oriented secondary particle are in a range of 100 nm to 1600 nm, where the diameter of the primary particle is a maximum length of lengths of the primary particle in all directions; and
a particle size distribution parameter SPAN of the positive electrode active material satisfies the following formula: $SPAN=(D_v90-D_v10)/D_v50$, where $1.1 \leq SPAN \leq 1.4$.

In some implementations, the positive electrode active material satisfies one or more of the following features:

$D_v50$ of the positive electrode active material ranges from 9 μm to 10 μm;
diameters of at least 80% of the primary particles in the oriented secondary particle are in a range of 400 nm to 1500 nm; and
SPAN of the positive electrode active material satisfies: $1.2 \leq SPAN \leq 1.3$.

Adjusting $D_v50$ of the positive electrode active material to fall within the foregoing range can enable particles in the positive electrode active material to have a more proper particle size distribution, thereby having a more proper specific

surface area, to help not only inhibit a side reaction but also have a relatively short active ion transport distance, so that the secondary battery has good cycle performance and dynamics performance.

Adjusting the diameters of the primary particles in the oriented secondary particle to fall within the foregoing range helps control the active crystal face proportion of the primary particles, so that the lithium-ion de-intercalation dynamics of the primary particles is further improved.

Adjusting the particle size distribution parameter SPAN of the positive electrode active material to fall within the foregoing range helps make large particles and small particles in the positive electrode active material have proper volume proportions respectively, so that the positive electrode active material has a high powder compaction density while having a high capacity, to help maximize the volumetric energy density on the positive electrode side. The particles are designed through matching between large and small particles, so that the formed polycrystalline material can increase the volumetric energy density of the positive electrode material.

In some implementations, the positive electrode active material satisfies one or more of the following features:

$D_v90$ of the positive electrode active material satisfies: 15 $\mu m \leq D_v90 \leq$ 18 $\mu m$;
$D_v10$ of the positive electrode active material satisfies: 4 $\mu m \leq D_v10 \leq$ 6 $\mu m$;
$D_m10$ of the positive electrode active material satisfies: $D_n10 \geq$ 2 $\mu m$.

In some implementations, the positive electrode active material satisfies one or more of the following features:

$D_v90$ of the positive electrode active material satisfies: 16 $\mu m \leq D_v90 \leq$ 17 $\mu m$;
$D_v10$ of the positive electrode active material satisfies: 4.5 $\mu m \leq D_v10 \leq$ 5.5 $\mu m$.

Controlling $D_v90$ of the positive electrode active material to fall within the foregoing range helps control large particles in the material to have a proper volume proportion, and helps control a specific surface area, to inhibit a side reaction.

Controlling $D_v10$ of the positive electrode active material to fall within the foregoing range helps control small particles in the material to have a proper volume proportion, and helps improve a compaction density of the material.

Controlling $D_n10$ of the positive electrode active material to fall within the foregoing range can control the quantity of small particles in the material to fall within a more proper range, to help control a more proper specific surface area, thereby improving the storage life of the battery.

In some implementations, in the oriented secondary particle, the positive electrode active substance includes a layered lithium-ion active material.

In some implementations, in the oriented secondary particle, the positive electrode active substance includes a lithium-nickel-containing composite oxide.

By introducing the lithium-nickel-containing composite oxide to the positive electrode active substance of the oriented secondary particle, introduction of the nickel element helps to improve the energy density of the positive electrode active material, and further helps to improve the power performance of the battery.

In some implementations, a molar ratio of a nickel element to an oxygen element in the lithium-nickel-containing composite oxide is denoted as $Q_{Ni/O}$, where $0.3 \leq Q_{Ni/O} \leq 0.5$.

Controlling the molar ratio ($Q_{Ni/O}$) of the nickel element to the oxygen element in the lithium-nickel-containing composite oxide to fall within the foregoing range can enable the positive electrode active substance to have a high nickel content, to better help improve the energy density of the positive electrode active material.

In some implementations, the oriented secondary particle satisfies one or more of the following features:

in the oriented secondary particle, $0.4 \leq Q_{Ni/O} \leq 0.5$;
the lithium-nickel-containing composite oxide includes at least one of a cobalt (Co) element and an M element, where the M element is at least one of an Mn element and an Al element;
the lithium-nickel-containing composite oxide includes a doping element, $Q_{Ni/O} < 0.5$, and the doping element includes at least one element of Zr, Al, B, Sr, and Ca; and
at least a part of the primary particle includes a particle body and a coating layer on at least a part of a surface of the particle body, the particle body includes the lithium-nickel-containing composite oxide, and the coating layer includes at least one element of Zr, Al, B, Sr, and Ca.

$Q_{Ni/O}$ is controlled to fall within the foregoing range, so that the lithium-nickel-containing composite oxide has a high nickel content, and the energy density of the positive electrode active material can be significantly improved.

The introduction of the cobalt (Co) element into the lithium-nickel-containing composite oxide helps to stabilize a material structure, and helps to improve cycle performance and rate performance of the positive electrode active material.

The introduction of the manganese (Mn) element into the lithium-nickel-containing composite oxide helps reduce

costs and improve structural stability of the material.

The introduction of the aluminum (Al) element into the lithium-nickel-containing composite oxide helps improve the cycle stability of the material.

Performing one or more of the foregoing doping modification and the foregoing coating modification on the lithium-nickel-containing composite oxide can achieve one or more aspects of enhancing stability of the material, improving an energy density of the material, and improving a cycle life. For example, the structure of the lithium-nickel-containing composite oxide may be stabilized through bulk-phase doping. For example, a fast-ion conductor coating substance may be disposed on the surface of the lithium-nickel-containing composite oxide, so as to improve an energy density and a cycle life of the material.

In some implementations, in the oriented secondary particle, $0.3 \leq Q_{Ni/O} \leq 0.5$; Further, in the oriented secondary particle, the positive electrode active substance includes one or more of a lithium-nickel-cobalt-manganese oxide, a lithium-nickel-cobalt-aluminum oxide, and a modified form of any one of the foregoing substances, where the modified form includes one or more of doping modification and coating modification, a doping element used for the doping modification includes at least one element of Zr, Al, B, Sr, and Ca, and a coating element used for the coating modification includes at least one element of Zr, Al, B, Sr, and Ca; and

a molar ratio $R_{Ni/O}$ of the nickel element to the oxygen element in the positive electrode active substance satisfies $0.4 \leq R_{Ni/O} \leq 0.5$.

In some implementations, the positive electrode active material satisfies one or more of the following features:

$D_v50$ of the positive electrode active material ranges from 8 μm to 11 μm, and optionally ranges from 9 μm to 10 μm;
diameters of at least 80% of the primary particles in the oriented secondary particle are in a range of 100 nm to 1600 nm, and optionally in a range of 400 nm to 1500 nm;
a particle size distribution parameter SPAN of the positive electrode active material satisfies the following formula: $SPAN=(D_v90-D_v10)/D_v50$, where $1.1 \leq SPAN \leq 1.4$, and optionally $1.2 \leq SPAN \leq 1.3$.

The positive electrode active substance of the oriented secondary particle may be provided with a ternary positive electrode active substance having a high nickel content and a modified substance of the ternary positive electrode active substance. The modified form may include one or more of doping modification and coating modification, and may be used to obtain a ternary positive electrode active material having a high energy density and a long life. The structure of the ternary positive electrode active substance may be stabilized through bulk-phase doping, and the energy density and the cycle life of the material may be improved by disposing a fast-ion conductor coating substance on the surface of the ternary positive electrode active substance. Controlling the angles $\alpha 1$ and F1 can control the orientation and distribution of the primary particles in the secondary particle of the positive electrode active material, and can take into consideration a balance between inhibition of inside infiltration of the electrolyte solution and optimization of a distance of the lithium-ion transmission path, thereby improving the mass energy density and the lithium-ion diffusion dynamics of the material. Further, by controlling one or more parameters of $D_v50$ of the positive electrode active material, the diameter of the primary particle in the oriented secondary particle, and the particle size distribution parameter SPAN of the positive electrode active material to fall within the foregoing ranges, the foregoing related advantages may be further combined. For example, adjusting the particle size distribution parameter SPAN of the positive electrode active material to fall within the foregoing range helps make large particles and small particles in the positive electrode active material have proper volume proportions respectively, and can further increase the powder compaction density of the material and the volumetric energy density of the positive electrode plate. The secondary particles are designed through matching between large and small particles, so that the formed polycrystalline material can increase the volumetric energy density of the positive electrode material. Still further, the bulk-phase structure and surface stability of the material can be improved by combining the doping and coating modification methods, to achieve a longer cycle life.

In some implementations, in the oriented secondary particle, an average value of L of the inner layer is less than 700 nm, and an average value of L of the outer layer is greater than or equal to 720 nm, where

a length value of the primary particle along the longitudinal direction is denoted as L, and a distance between the center and the surface of the oriented secondary particle is denoted as R; and a part from the center of the oriented secondary particle to a position 2/3R away from the center is denoted as an inner layer, and a part from the position 2/3R away from the center to the surface of the oriented secondary particle is denoted as an outer layer.

In some implementations, in the oriented secondary particle, an average value of L of the inner layer is less than or equal to 660 nm, and an average value of L of the outer layer is greater than or equal to 750 nm.

For the positive electrode active material whose positive electrode active substance in the oriented secondary particle includes the lithium-nickel-containing composite oxide, by controlling the average values of L of the inner layer and the outer layer in the oriented secondary particle to fall within the foregoing ranges, the outer layer can have relatively fast reversible de-intercalation efficiency of active ions, and the inner layer can have a larger angle to better inhibit infiltration of an electrolyte solution into grain boundaries, thereby better helping comprehensively improve the actual energy density,

the cycle performance, and the dynamics performance of the battery.

In some implementations, the secondary battery further includes a negative electrode plate, a separator, and an electrolyte solution, and the separator is located between the positive electrode plate and the negative electrode plate.

In some implementations, the secondary battery is a lithium-ion secondary battery.

A second aspect of the present application provides a positive electrode active material.

In some implementations, the positive electrode active material includes secondary particles, and the secondary particle is an agglomerate including primary particles; and the primary particles include a positive electrode active substance;

in any one of the secondary particles, a direction from a center of the secondary particle to a surface is denoted as an X direction; an X direction passing through a center of any one of the primary particles is denoted as a longitudinal direction; and in any one of the primary particles, a longest axis of the primary particle is denoted as an a-axis; and the secondary particles include oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, where $15° \leq \alpha 1 \leq 45°$, and $F1 \geq 60\%$.

The positive electrode plate prepared by using the foregoing positive electrode active material may be used to prepare a secondary battery having a high energy density, a good dynamics performance, and a long cycle life. Using the orientation angle and the quantity proportion of the primary particles included in the oriented secondary particle in the positive electrode active material can inhibit infiltration of the electrolyte solution into the grain boundary of the secondary particle, to help inhibit a side reaction between the electrolyte solution and the surface of the positive electrode active substance, can improve the actual gram capacity and cycle life of the positive electrode active material, and can further implement a relatively short active ion de-interposition path, to help promote rapid de-interposition of the active ions during a charging/discharging process, which can improve the actual energy density of the secondary battery, and can enable the secondary battery to have a good dynamics performance.

In some implementations, the positive electrode active material in the secondary battery described in the first aspect of the present application is provided.

A third aspect of the present application provides a power consuming apparatus, including at least one of the secondary battery described in the first aspect of the present application and the positive electrode active material described in the second aspect of the present application.

Details of one or more implementations or examples of the present application are provided in the accompanying drawings and descriptions below. Other features, objects, and advantages of the present application will become apparent from the specification, the drawings, and the claims.

## BRIEF DESCRIPTION OF THE DRAWINGS

To better describe and illustrate implementations, examples, or examples provided in the present application, reference may be made to one or more drawings. However, the additional details or examples used to describe the drawings should not be regarded as limitations to the scopes of any one of the applications disclosed, the implementations, examples, or examples described for the present, and the most modes of the examples understood for the present. In addition, in all the accompanying drawings, same components are indicated by same reference numerals. In the accompanying drawings:

FIG. 1 is a schematic diagram of relevant parameters of an oriented secondary particle according to an example of the present application, where only a cross section of some primary particles at a two-dimensional cross section of the oriented secondary particle is showed.

FIG. 2 shows an experimental result of a view of a cross section of an oriented secondary particle according to an example of the present application.

FIG. 3 is a schematic diagram of a battery cell according to an implementation of the present application.

FIG. 4 is an exploded view of a battery cell according to an implementation of the present application shown in FIG. 3.

FIG. 5 is a schematic diagram of a battery module according to an implementation of the present application;

FIG. 6 is a schematic diagram of a battery pack according to an implementation of the present application;

FIG. 7 is an exploded view of a battery pack according to an implementation of the present application shown in FIG. 6;

FIG. 8 is a schematic view of a power consuming apparatus in which a secondary battery serves as a power source according to an example of the present application.

Descriptions of reference numerals:
52: electrode assembly; 1: battery pack; 2: upper box; 3: lower box; 4: battery module; 5: battery cell; 51: case; 53: cover plate; and 6: power consuming apparatus.

## DETAILED DESCRIPTION

Hereinafter, some implementations and some examples of a secondary battery, a positive electrode active material, and a power consuming apparatus of the present application are described in detail with reference to the accompanying drawings as appropriate. However, there will be cases where unnecessary detailed descriptions are omitted. For example, there are cases in which detailed explanations of well-known matters and repeated explanations of actually the same structure are omitted. This is to prevent the following description from becoming unnecessarily lengthy and to facilitate the understanding of those skilled in the art. In addition, the accompanying drawings and subsequent descriptions are provided for those skilled in the art to fully understand the present application, and are not intended to limit the subject matter recited in the claims.

A "range" disclosed in the present application may be defined in a form of a lower limit and an upper limit. A given range is defined by selecting a lower limit and an upper limit, and the selected lower limit and upper limit define boundaries of a particular range. A range defined in this manner may be inclusive or exclusive of the end values, and any end value may be independently inclusive or exclusive and may be arbitrarily combined, that is, any lower limit may be combined with any upper limit to form a range. For example, if a range of 60 to 120 and 80 to 110 is listed for specific parameters, it is also expected to be understood as a range of 60 to 110 and 80 to 120. Additionally, if the minimum range values 1 and 2 and the maximum range values 3, 4 and 5 are listed, the following ranges are all contemplated: 1-3, 1-4, 1-5, 2- 3, 2-4 and 2-5. In the present application, unless otherwise specified, the value range "a to b" represents an abbreviated representation of any combination of real numbers between a and b, where a and b are both real numbers. For example, the numerical range "0 to 5" indicates that all real numbers between "0 to 5" have been listed in this article, and "0 to 5" is only a shortened representation of these numerical combinations. In addition, when a parameter is expressed as an integer greater than or equal to 2, it is equivalent to listing that the parameter is an integer such as 2, 3, 4, 5, 6, 7, 8, 9, 10, 11, 12, or the like. For example, when a parameter is expressed as an integer selected from "2-10", it is equivalent to lists integers 2, 3, 4, 5, 6, 7, 8, 9, and 10.

The terms "plurality", "multiple", "plural", "several", and the like in the present application mean greater than 2 or equal to 2 in number, unless otherwise limited. For example, "one or more" means one or not less than (≥, greater than or equal to) two. It may be understood that "any plurality of" items refers to any suitable combination of multiple items, that is, "any plurality of" items may be combined in a manner that does not conflict with each other and that can implement the present application.

Unless otherwise specified, all the implementations and optional implementations of the present application can be combined with each other form new technical solutions.

"Example" mentioned herein means that particular features, structures, or features described with reference to the example may be included in at least one example or implementation of the present application. The term appearing at different positions of the specification may not necessarily refer to the same example or an independent or alternative example that is mutually exclusive with another example. A person skilled in the art explicitly or implicitly understands that the examples described in the specification may be combined with other examples. An "implementation" mentioned in this specification has a similar understanding.

A person skilled in the art may understand that, in a method in implementations or examples, a writing order of the steps does not imply a strict order of execution and does not impose any limitation on an implementation process, and a detailed execution order of the steps should be determined according to functions and possible internal logic of the steps. Unless otherwise specified, all the steps in the present application can be performed in the order described or in a random order, and preferably in the order described. For example, the phrase "the method M includes step (a) and step (b)" means that the method M may include step (a) and step (b) performed sequentially, or may include step (b) and step (a) performed sequentially. For another example, that the method M may further include step (c) means that step (c) may be added to the method M in any order. For example, the method M may include step (a), step (b), and step (c), or may include step (a), step (c), and step (b), or may include step (c), step (a), and step (b).

In the present application, in an open technical feature or technical solution described by using words such as "contain", "include", and "include", unless otherwise specified, not excluding additional members other than the listed members may be considered as providing a closed feature or solution consisting of the listed members, and further

providing an open feature or solution including additional members other than the listed members, if no other descriptions are provided. For example, A includes a1, a2, and a3, and may further include other members, or may not include additional members, unless otherwise specified, which may be considered as providing a feature or solution "A consists of a1, a2, and a3" or "A is selected from a1, a2, and a3", and further providing a feature or solution "A not only includes a1, a2, and a3, but also includes other members".

In the present application, unless otherwise specified, A (such as B) indicates that B is a non-limiting example of A. It can be understood that A is not limited to B.

In the present application, "optionally", "optional", or "option", refers to presence or absence, that is, being selected from any one of two parallel solutions: "presence" or "absence". If there are multiple "optional" in one technical solution, unless otherwise specified and there are no contradictions or mutual constraints, each "optional" is independent. Unless otherwise specified, the description such as "optionally include" or "optionally contain" in the present application, using "optionally include" as an example, indicates "may include or not include".

In the present application, unless otherwise stated, a feature or scheme corresponding to "and/or" includes any one of two or more relevant listed items, and also includes any and all combinations of the relevant listed items. The any and all combinations include combinations of any two relevant listed items, any more relevant listed items, or all relevant listed items. For example, "A and/or B" means the group consisting of A, B, and "a combination of A and B". "Including A and/or B" may mean "including A, including B, and including A and B", and may also mean "including A, including B, or including A and B", which can be properly understood according to the statement.

"A combination thereof", "any combination thereof", "any combination manner thereof", or the like used in this specification includes all proper combination manners of any two or any more than two items of the listed items.

In this specification, the "proper" in "proper combination manner", "proper manner", "any proper manner", or the like is subject to being capable of implementing the technical solution of the present application.

Herein, "preferred", "better", "preferable", "suitable", "relatively good", and "comparatively good" are merely intended to describe implementations or examples with better effects, and should not be understood as a limitation on the protection scope of the present application. If there are multiple "preferred" in one technical solution, unless otherwise specified and there are no contradictions or mutual constraints, each "preferred" is independent.

In the present application, "further", "still further", "particularly", "for example", "such as", "example", and "exemplification" are used for descriptive purposes and indicate differences in content, but should not be understood as limitations on the protection scope of the present application.

In the present application, in the "first aspect", "second aspect", "third aspect", and the like, the terms "first", "second", "third", and the like are only used for descriptive purposes, and cannot be understood as indicating or implying relative importance or quantity, nor implicitly indicating the importance or quantity of the indicated technical features. Moreover, the "first", "second", "third", and the like are merely used for the purpose of non-exhaustive description, and should not be understood as constituting a closed limitation on the quantity.

In the present application, the term "room temperature" generally refers to 4°C to 35°C, and may refer to 20°C ±5°C. In some examples of the present application, the room temperature refers to 20°C to 30°C.

In the present application, with respect to the unit of a data range, if only the right end point is followed by the unit, it means that the units of the left end point and the right end point are the same. For example, 3 to 5 h and 3-5 h both indicate that the units of the left end point "3" and the right end point "5" are both h (hour), and both have the same meaning as that of 3h to 5h. In addition, similar descriptions of other parameters such as temperature and size should be understood in the same way.

The weight or mass of relevant components mentioned in the implementations or examples of the present application may not only refer to the content of each component, but also represent the weight or mass ratio relationship between the components. Therefore, the contents of relevant components scaled up or down according to the implementations or examples of the present application are embraced within the scope described in the present application. Further, the mass described in the implementations or examples of the present application may be a mass unit known in the chemical domain, such as microgram (μg), milligram (mg), gram (g), or kilogram (kg). Unless otherwise specified, the mass ratio is equal to the corresponding weight ratio. For example, if the mass of substance A is m1 and the weight is W1, and the mass of substance B is m2 and the weight is W2, then the mass ratio m1/m2 of the two substances is numerically equal to the corresponding weight ratio W1/W2.

In the present application, unless otherwise specified, wt% represents weight percentage by weight and is numerically equal to the corresponding mass percentage by mass.

In the present application, "not less than", "greater than or equal to", and "≥" have the same meaning and are used interchangeably; "not greater than", "less than or equal to", and "≤" have the same meaning and are used interchangeably; "greater than" can be equivalently expressed as ">", and "less than" can be equivalently expressed as "<". In the present application, unless otherwise specified, "greater than or equal to" and "≥" can be regarded as providing two solutions: "greater than" and "equal to". In the present application, unless otherwise specified, "less than or equal to" and "≤" can be regarded as providing two solutions: "less than" and "equal to".

In the present application, exemplary descriptions such as "in some implementations (or examples)" and "in one implementation (or example)" may include, but are not limited to, the following meanings: These solutions may be combined with other solutions in appropriate ways to form new technical solutions.

A common type of positive electrode active material is a polycrystalline material. In this case, the secondary particle is composed of a plurality of primary particles. Taking a lithium-ion active material as an example, in the secondary particle usually obtained, the longest axis (a-axis) of the primary particle is basically consistent with the direction from the center to the surface of the secondary particle. In this case, the transport distance of lithium-ions can be shortened to improve the dynamics of the positive electrode active material during lithium-ion de-intercalation. However, due to the overly regular orientation of the primary particles, there are obvious through-channels between the primary particles, which makes it easy for the electrolyte solution to penetrate into the secondary particle, causing more serious interfacial side reactions, resulting in a reduction in the cycle performance and actual gram capacity of the positive electrode active material, and thus deteriorating the cycle life of the material.

In view of this, the present application provides a secondary battery, a positive electrode active material, and a power consuming apparatus. The secondary battery has a high energy density, a good dynamics performance, and a long cycle life together.

In some implementations, the secondary battery includes a positive electrode plate, where the positive electrode plate includes a positive electrode active material, the positive electrode active material includes secondary particles, and the secondary particle is an agglomerate including a plurality of primary particles; and in any one of the primary particles, a longest axis of the primary particle is denoted as an a-axis; and an X direction passing through a center of any one of the primary particles is denoted as a longitudinal direction; and in any one of the secondary particles, a direction from a center of the secondary particle to a surface is denoted as an X direction; the secondary particles include oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, where $15° \leq \alpha 1 \leq 45°$, and $F1 \geq 60\%$.

Generally, the secondary battery includes a positive electrode plate, a negative electrode plate, an electrolyte, and a separator. During the charging and discharging process of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly serves to prevent a short circuit between the positive and negative electrodes while allowing ions to pass through.

In the present application, unless otherwise specified, the electrode plate may be a positive electrode plate or a negative electrode plate, and the "active substance" in the electrode plate refers to a substance capable of reversibly intercalating and de-intercalating active ions. Unless otherwise specified, the "negative electrode active substance" refers to a substance used with the negative electrode plate that can reversibly intercalate and de-intercalate active ions. The "positive electrode active substance" refers to a substance used with the positive electrode plate that can reversibly de-intercalate and intercalate active ions. When the battery cell or the secondary battery is charged, active ions are de-intercalated from the positive electrode and intercalated into the negative electrode through the electrolyte. When the battery cell or the secondary battery is discharged, active ions are de-intercalated from the negative electrode and intercalated into the positive electrode. The active ions are not particularly limited. In some implementations, the active ions may include lithium-ions. Non-restrictively, the active ions may be lithium-ions. In this case, the battery cell is a lithium-ion battery cell, and the secondary battery is a lithium-ion secondary battery.

In the present application, "plate" and "electrode plate" have the same meaning and can be used interchangeably; "electrode active substance" and "active substance" have the same meaning and can be used interchangeably.

In the present application, unless otherwise specified, the "electrode active material layer" includes at least one of a positive electrode active material layer of the positive electrode plate and a negative electrode active material layer of the negative electrode plate, and the electrode active material layer may refer to the positive electrode active material layer or the negative electrode active material layer according to a specific scenario. It can be understood that the positive electrode active material layer contains a positive electrode active substance, and the negative electrode active material layer contains a negative electrode active substance. In the present application, the "electrode active material layer" may also be simply referred to as the "active material layer".

In the present application, unless otherwise specified, "separator" and "membrane" have the same meaning and can be used interchangeably.

It may be understood that, both "primary particles" and "secondary particles" are particles containing a positive electrode active substance.

In the present application, "primary particles" and "secondary particles" are terms well known in the art. "Primary particles" refer to monocrystalline or quasi-monocrystalline grains. The "secondary particle" refers to an agglomerated particle formed by the aggregation of two or more primary particles. The primary particles and the secondary particles can be easily distinguished by experimental means, for example, can be distinguished by using, but not limited to, a scanning

electron microscope (SEM) image captured by an SEM.

A first aspect of the present application provides a secondary battery, including a positive electrode plate, where the positive electrode plate includes a positive electrode active material, the positive electrode active material includes oriented secondary particles.

In some implementations, a secondary battery is provided, including a positive electrode plate, where the positive electrode plate includes a positive electrode active material, the positive electrode active material includes secondary particles, and the secondary particle is an agglomerated particle including a plurality of primary particles; and the primary particles include a positive electrode active substance;

in any one of the secondary particles, a direction from a center of the secondary particle to a surface is denoted as an X direction; an X direction passing through a center of any one of the primary particles is denoted as a longitudinal direction; and in any one of the primary particles, a longest axis of the primary particle is denoted as an a-axis; and the secondary particles include oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, where $15° \leq \alpha 1 \leq 45°$, and $F1 \geq 60\%$.

In the present application, unless otherwise specified, the "X direction" refers to a direction from a center of the secondary particle to a surface. It may be understood that, different positions on the surface of the secondary particle to which the center of the secondary particle points correspond to different X directions; and each position on the surface of the secondary particle corresponds to its corresponding X direction.

In the present application, unless otherwise specified, "longitudinal direction" refers to a direction passing through the center of a secondary particle and the center of a primary particle simultaneously. It may be understood that, different primary particles correspond to different longitudinal directions, and each primary particle corresponds to its corresponding longitudinal direction.

In the present application, unless otherwise specified, the "a-axis" of a primary particle refers to the longest axis of the primary particle in all directions. Generally, the longest axis in the two-dimensional cross section of a primary particle can be used as the test result of the length of the a-axis.

In the present application, unless otherwise specified, a quantity proportion of primary particles whose a-axes form angles $\alpha 1$ with the longitudinal directions in the oriented secondary particle is denoted as F1.

In the present application, unless otherwise specified, the "oriented secondary particle" refers to a certain number of primary particles with the following feature: The a-axis of the primary particle makes a certain angle with the corresponding longitudinal direction. Unless otherwise specified, the angle formed by the a-axis of the primary particle and the corresponding longitudinal direction is denoted as "$\alpha 1$", which can be called "angle $\alpha 1$". Unless otherwise specified, a quantity proportion of primary particles whose a-axes form angles $\alpha 1$ with the longitudinal directions in the oriented secondary particle is denoted as "F1". In the present application, generally, when a secondary particle satisfies $15° \leq \alpha 1 \leq 45°$ and $F1 \geq 60\%$, the secondary particle is determined as an oriented secondary particle.

The positive electrode active material includes oriented secondary particles. The oriented secondary particles include a particular quantity of primary particles whose a-axes form angles $\alpha 1$ with corresponding longitudinal directions. In one aspect, controlling the quantity proportion F1 of the primary particles forming the foregoing angles $\alpha 1$ to the oriented secondary particle to fall within the foregoing range helps inhibit the electrolyte solution from infiltrating into the grain boundaries of the secondary particle, helps inhibit the side reaction between the electrolyte solution and the surface of the positive electrode active substance, and can improve the actual gram capacity and the cycle life of the positive electrode active material. In the other aspect, controlling the angles $\alpha 1$ to fall within the foregoing angle range can further implement a relatively short active ion de-intercalation path, helps promote rapid de-intercalation of the active ions in the positive electrode active material during a charge/discharge process, can improve an actual energy density of the secondary battery, and can enable the secondary battery to have a good dynamics performance.

In some implementations of the present application, the angle $\alpha 1$ may be obtained in the following manner: in a cross section passing through a center of the oriented secondary particle, a direction from the center of the oriented secondary particle to a surface of the oriented secondary particle is used as an X direction; an X direction passing through a center of a cross section of a primary particle is used as a longitudinal direction corresponding to the primary particle; a longest axis in the cross section of the primary particle is denoted as an a-axis; and the angle $\alpha 1$ is obtained according to an angle formed between the a-axis and the corresponding longitudinal direction.

the foregoing parameter $\alpha 1$ may be statistically analyzed by using a view of the cross section passing through the center of the oriented secondary particle. It may be understood that, in the view of the cross section passing through a center of the oriented secondary particle, the cross section and cross-sectional profile of the oriented secondary particle can be displayed, and the cross section and cross-sectional profile of primary particles can also be displayed. Unless otherwise specified, the center of the oriented secondary particle can be determined in the following manner: Based on the cross-sectional profile of the oriented secondary particle, the intersection point between the longest axis and the shortest axis in the cross section of the oriented secondary particle is used as the center of the oriented secondary particle.

The ion polishing cross-sectional morphology analysis method can be used to statistically analyze the parameters related to the primary particles in the oriented secondary particle. Non-restrictively, the secondary particle can be cut to form a cross section that basically passes through the center of the secondary particle to obtain a sample with the cut surface, and the relevant parameters of the primary particles in the view of the cross section of the secondary particle are further analyzed statistically with reference to the microscopic morphology observation method. Non-restrictively, a cross section that basically passes through the center of the secondary particle can be obtained by using instruments or devices including but not limited to a focused electron beam (FIB) electron microscope (non-limiting examples include FEI Scios 2HiVac equipment), and an ion cross-section polisher (non-limiting examples include IB-09010 CP argon ion cross-section polisher and IB-19500CP ion cross-section polisher from JEOL of Japan). The microscopic morphology observation method can use instruments or devices including but not limited to the scanning electron microscopy (SEM) technology. Non-restrictively, a high-resolution field emission scanning electron microscope can be used. Non-limiting examples of SEM instruments include the Sigma 300 scanning electron microscope and the Apreo 2 SEM field emission scanning electron microscope from ZEISS of Germany. In some implementations, ion polishing cross-sectional morphology analysis combined with the scanning electron microscopy (SEM) method was used to obtain a view of the cross section passing through the center of the secondary particle.

The above method can be used to analyze parameters including but not limited to the following: the a-axis of the primary particle, the angle (angle $\alpha 1$) between the a-axis of the primary particle and the corresponding longitudinal direction, the quantity proportion F1 of primary particles whose a-axes form angles $\alpha 1$ with the longitudinal directions, the deviation direction of the angle $\alpha 1$ relative to the X direction and the anisotropy index $I_{\alpha 1}$ of the angle $\alpha 1$, the length L of the primary particle along the longitudinal direction, the length W of the primary particle perpendicular to the longitudinal direction, the $R_{L/W}$ average value of the inner layer ($R_{MI}$), and the $R_{L/W}$ average value of the outer layer ($R_{MO}$). For manners of determining some of the above parameters, reference may be made to FIG. 1. The example section below can also be used for the test analysis method. It needs to be stated that FIG. 1 shows only a cross section of some primary particles at a cross section of the oriented secondary particle.

In some implementations, the oriented secondary particle is spherical or quasi-spherical. The aspect ratio of a "quasi-spherical particle" is close to 1, and ranges from 0.8 to 1.2 as a non-limiting example. The aspect ratio of a quasi-spherical particle is the ratio of its longest axis to its shortest axis. The test analysis can be performed using methods and conventional instruments known in the art.

In some implementations, $F1 \geq 60\%$, optionally, $F1 \geq 64\%$, or may be any one of the following percentages, or is greater than or equal to any one of the following percentages, or is selected from an interval formed by any one of the following percentages and 100%: 60%, 61%, 62%, 63%, 64%, 65%, 66%, 67%, 68%, 69%, 70%, 80%, 85%, 90%, and 95%. Non-restrictively, F1 may alternatively be in any one of the following ranges: 60% to 100%, 70% to 100%, 60% to 90%, and 70% to 90%.

Controlling the quantity proportion (F1) of the primary particles whose a-axes form the angles $\alpha 1$ with the longitudinal directions to the oriented secondary particle to fall within the foregoing range, in one aspect, helps more effectively inhibit the electrolyte solution from infiltrating into the grain boundaries of the secondary particle, thereby more effectively inhibiting the side reaction between the electrolyte solution and the surface of the positive electrode active substance, and better improving the actual gram capacity and the cycle life of the positive electrode active material; and in the other aspect, better helps provide a relatively short active ion de-interposition path, thereby better helping improve an actual energy density and a good dynamics performance of the secondary battery.

In the present application, unless otherwise specified, a quantity proportion of the oriented secondary particles in the secondary particles is denoted as P2.

In some implementations, $P2 \geq 60\%$, optionally, $P2 \geq 70\%$, further optionally, $P2 \geq 75\%$, or may be any one of the following percentages, or is greater than or equal to any one of the following percentages, or is selected from an interval formed by any two of the following percentages, or is selected from an interval formed by any one of the following percentages and 100%: 60%, 61%, 62%, 63%, 64%, 65%, 66%, 67%, 68%, 69%, 70%, 72%, 75%, 80%, 85%, 90%, 95%, and 99%. Non-restrictively, P2 may alternatively be in any one of the following ranges: 60% to 100%, 70% to 100%, 80% to 100%, and 90% to 100%.

Controlling the quantity proportion (P2) of the oriented secondary particles in the secondary particles to fall within the foregoing range helps more prominently play a comprehensive role in improving the high energy density, the dynamics performance, and the long cycle life of the secondary battery by the oriented secondary particles.

P2 may be obtained by using, but not limited to, the following method: determining, according to a randomly selected view of a cross section including at least 10 secondary particles and according to an SEM analysis result of the view of the cross section passing through the center of a secondary particle, whether the secondary particle is an oriented secondary particle. When $15° \leq \alpha 1 \leq 45°$, and $F1 \geq 60\%$, the secondary particle is counted as an oriented secondary particle; or when $\alpha 1$ does not fall within the foregoing range or $F1 < 60\%$, the secondary particle is not counted as an

oriented secondary particle. The percentage of the number of oriented secondary particles is calculated according to a counting result.

In the present application, unless otherwise specified, a length value of the primary particle along the longitudinal direction is denoted as L, a shortest length value of the primary particle perpendicular to the longitudinal direction is denoted as W, and a ratio of L to W in the primary particle is denoted as $R_{L/W}$.

In some implementations, in the oriented secondary particle, $R_{L/W}$ of the primary particles is less than or equal to 4.

Adjusting the angle $\alpha 1$ formed between the a-axis of the primary particle and the corresponding longitudinal direction can adjust the length ratio $R_{L/W}$ of the primary particle in the longitudinal direction and a transverse direction (the transverse direction is a direction perpendicular to the longitudinal direction). Further, adjusting $R_{L/W}$ to fall within the foregoing range helps accumulate the primary particles more closely in a radial direction (the X direction) of the oriented secondary particle, thereby better helping improve the energy density of the battery.

In some implementations, the value L, the value W, and the value $R_{L/W}$ may be obtained in the following manner: in a cross section passing through a center of the oriented secondary particle, a direction from the center of the oriented secondary particle to a surface of the oriented secondary particle is used as an X direction; an X direction passing through a center of a cross section of a primary particle is used as a longitudinal direction corresponding to the primary particle; the value L is obtained according to the length value of the primary particle along the corresponding longitudinal direction, the value W is obtained according to a length value of the primary particle along the direction perpendicular to the corresponding longitudinal direction, and the value $R_{L/W}$ is obtained according to a ratio obtained by dividing the value L by the value W.

the foregoing parameters L, W, and $R_{L/W}$ may be analyzed statistically by using a view of the cross section passing through the center of the oriented secondary particle.

In some implementations, the positive electrode active material satisfies at least one of the following features (any numerical parameter in the following features may alternatively be selected from any suitable value or range in the context):

in the oriented secondary particle, $R_{L/W}$ of the primary particles satisfies $0 < R_{L/W} \leq 4$, and optionally, $0.95 \leq R_{L/W} \leq 4$; and

in the oriented secondary particle, an average value of $R_{L/W}$ of the primary particles ranges from 1.5 to 2.5, and optionally ranges from 1.5 to 2.0.

In some implementations, in the oriented secondary particle, $R_{L/W}$ of the primary particles satisfies $0 < R_{L/W} \leq 4$, and optionally, $0.95 \leq R_{L/W} \leq 4$. Non-restrictively, an average value of $R_{L/W}$ of the primary particles may alternatively be any one of the following values or be selected from an interval formed by any two of the following values: 0.95, 0.96, 0.98, 1, 1.0, 1.1, 1.2, 1.4, 1.5, 1.6, 1.8, 2, 2.0, 2.1, 2.2, 2.4, 2.5, 2.6, 2.8, 3, 3.0, 3.2, 3.4, 3.5, 3.6, 3.7, 3.8, 4.0, and 4. For example, an average value of $R_{L/W}$ of the primary particles may alternatively be selected from any one of the following ranges: $0.95 \leq R_{L/W} \leq 3.8$, $0.95 \leq R_{L/W} \leq 3.7$, and $0.98 \leq R_{L/W} \leq 3.67$.

In some implementations, in the oriented secondary particle, an average value of $R_{L/W}$ of the primary particles ranges from 1.5 to 2.5, and optionally ranges from 1.5 to 2.0. Non-restrictively, an average value of $R_{L/W}$ of the primary particles may alternatively be any one of the following values or be selected from an interval formed by any two of the following values: 1.5, 1.6, 1.7, 1.8, 1.85, 1.86, 1.9, 2, 2.0, 2.1, 2.2, 2.3, 2.4, and 2.5.

Adjusting one or two parameters of a range of the values of $R_{L/W}$ and the average value of $R_{L/W}$ of the primary particles in the oriented secondary particle to fall within the foregoing ranges can adjust the orientation and orientation distribution features of the primary particles, can better take into consideration both the inhibiting effect on the infiltration of the electrolyte solution and the reversible de-intercalation efficiency of the active ions, and helps better take into consideration the high energy density, the cyclic performance, and the good dynamics performance together.

In the present application, unless otherwise specified, a distance between the center and the surface of the oriented secondary particle is denoted as R; and a part from the center of the oriented secondary particle to a position 2/3R away from the center is denoted as an inner layer, and a part from the position 2/3R away from the center to the surface of the oriented secondary particle is denoted as an outer layer.

In the present application, unless otherwise specified, in the oriented secondary particle, an average value of $R_{L/W}$ of the inner layer is denoted as $R_{MI}$, and an average value of $R_{L/W}$ of the outer layer is denoted as $R_{MO}$.

In some implementations, $R_{MI} < R_{MO}$.

When the primary particles form the foregoing angles $\alpha 1$, further controlling $R_{MI} < R_{MO}$ helps more rapidly de-intercalate the active ions located on the outer layer and the outer surface of the secondary particle, and better helps improve the dynamics performance of the positive electrode active material and the battery.

In some implementations, the positive electrode active material satisfies one or more of the following features (any numerical parameter in the following features may alternatively be selected from any suitable value or range in the

context):

in the oriented secondary particle, $R_{MI} < 1.8$ (optionally, $1.3 \leq R_{MI} < 1.8$), and $R_{MO} \geq 1.8$ (optionally, $1.8 \leq R_{MO} \leq 2.3$); and

in the oriented secondary particle, $R_{L/W}$ of the outer layer satisfies $1.2 \leq R_{L/W} \leq 4$, and $R_{L/W}$ of the inner layer satisfies $0.95 \leq R_{L/W} \leq 2.8$.

In some implementations, the positive electrode active material satisfies one or more of the following features (any numerical parameter in the following features may alternatively be selected from any suitable value or range in the context):

in the oriented secondary particle, $1.3 \leq R_{MI} < 1.8$, and $1.8 \leq R_{MO} \leq 2.3$; and

in the oriented secondary particle, $R_{L/W}$ of at least 80% of the primary particles in the outer layer satisfies $1.4 \leq R_{L/W} \leq 4$, and $R_{L/W}$ of at least 80% of the primary particles in the inner layer satisfies $0.95 \leq R_{L/W} \leq 2.0$.

In some implementations, $R_{MI} < 1.8$, optionally, $1.3 \leq R_{MI} < 1.8$, and further optionally, $1.3 \leq R_{MI} \leq 1.75$. Non-restrictively, $R_{MI}$ may alternatively be any one of the following values, or be greater than or equal to any one of the following values and less than 1.8, or be selected from an interval formed by any two of the following values: 1.3, 1.35, 1.4, 1.45, 1.5, 1.55, 1.6, 1.65, 1.7, and 1.75. Non-restrictively, $R_{MI}$ may alternatively be selected from any one of the following ranges: $1.4 \leq R_{MI} < 1.8$, $1.4 \leq R_{MI} \leq 1.75$, $1.4 \leq R_{MI} \leq 1.6$, and $1.45 \leq R_{MI} \leq 1.55$.

In some implementations, $R_{MO} \geq 1.8$, and optionally, $1.8 \leq R_{MO} \leq 2.3$. Non-restrictively, $R_{MO}$ may alternatively be any one of the following values, or be greater than or equal to 1.8 and less than or equal to any one of the following values, or be selected from an interval formed by any two of the following values: 1.8, 1.85, 1.9, 1.95, 2, 2.05, 2.1, 2.15, 2.2, 2.25, and 2.3. Non-restrictively, $R_{MO}$ may alternatively be selected from any one of the following ranges: $1.8 \leq R_{MO} \leq 2.2$, $1.9 \leq R_{MO} \leq 2.1$, and $2.0 \leq R_{MO} \leq 2.1$.

In some implementations, in the oriented secondary particle, $R_{L/W}$ of the outer layer satisfies $1.2 \leq R_{L/W} \leq 4$. Non-restrictively, $R_{L/W}$ of the outer layer may be any one of the following values or be selected from an interval formed by any two of the following values: 1.2, 1.4, 1.5, 1.6, 1.8, 2.0, 2.5, 3, 3.0, 3.2, 3.4, 3.5, 3.6, 3.7, 3.8, 4, and 4.0.

In some implementations, in the oriented secondary particle, $R_{L/W}$ of at least 80% of the primary particles in the outer layer satisfies $1.4 \leq R_{L/W} \leq 4$. Non-restrictively, $R_{L/W}$ of at least 80% of the primary particles in the outer layer may be any one of the following values or be selected from an interval formed by any two of the following values: 1.4, 1.5, 1.6, 1.8, 2.0, 2.5, 3, 3.0, 3.2, 3.4, 3.5, 3.6, 3.7, 3.8, 4, and 4.0.

In some implementations, in the oriented secondary particle, $R_{L/W}$ of the inner layer satisfies $0.95 \leq R_{L/W} \leq 2.8$. Non-restrictively, $R_{L/W}$ of the inner layer may be any one of the following values or be selected from an interval formed by any two of the following values: 0.95, 0.96, 0.98, 1, 1.0, 1.1, 1.2, 1.4, 1.5, 1.6, 1.8, 2, 2.0, 2.1, 2.2, 2.4, 2.5, 2.6, and 2.8.

In some implementations, in the oriented secondary particle, $R_{L/W}$ of at least 80% of the primary particles in the inner layer satisfies $0.95 \leq R_{L/W} \leq 2.0$. Non-restrictively, $R_{L/W}$ of at least 80% of the primary particles in the inner layer may be any one of the following values or be selected from an interval formed by any two of the following values: 0.95, 0.96, 0.98, 1, 1.0, 1.1, 1.2, 1.4, 1.5, 1.6, 1.8, 2, and 2.0.

Controlling the value of $R_{L/W}$ of the inner layer, the average value of $R_{L/W}$ of the inner layer ($R_{MI}$), the value of $R_{L/W}$ of the outer layer, and the average value of $R_{L/W}$ of the outer layer ($R_{MO}$) of the oriented secondary particle to have the foregoing combination manners can better control orientation distribution changes of the primary particles at the inner layer and the outer layer, helps better improve reversible de-intercalation efficiency of the active ions of the primary particles at the outer layer, can further take into consideration inhibition of infiltration of the electrolyte solution, and better helps take into consideration both the good cycle performance and dynamics performance.

In some implementations, in the oriented secondary particle, values of $R_{L/W}$ of the primary particles sequentially increase from the center of the oriented secondary particle to the surface of the oriented secondary particle.

Controlling $R_{L/W}$ of the primary particles in the oriented secondary particle to sequentially increase from the center to the surface can better control orientation distribution changes of the primary particles in the oriented secondary particle, helps better improve de-intercalation efficiency of the active ions of the primary particles at the outer layer, can further take into consideration inhibition of infiltration of the electrolyte solution, and better helps take into consideration both the good cycle performance and dynamics performance.

In the present application, unless otherwise specified, based on a quantity of primary particles in the oriented secondary particle whose a-axes form an angle $\alpha 1$ with the longitudinal direction, an anisotropy index of the angle $\alpha 1$ is denoted as $I_{\alpha 1}$. $I_{\alpha 1}$ may be measured in the following manner: in the cross section passing through the center of the oriented secondary particle, angles $\alpha 1$ by which the a-axes deviate from corresponding longitudinal directions clockwise are denoted as positive angles, angles $\alpha 1$ by which the a-axes deviate from corresponding longitudinal directions anticlockwise are denoted as negative angles, and $I_{\alpha 1}$ is a ratio of a quantity of the positive angles to a quantity of the

negative angles.

In some implementations, $0.4 \leq I_{\alpha 1} \leq 2.5$.

In some implementations, $0.5 \leq I_{\alpha 1} \leq 2.0$.

Non-restrictively, $I_{\alpha 1}$ may be any one of the following values or be selected from an interval formed by any two of the following values: 0.4, 0.5, 0.6, 0.7, 0.8, 0.9, 1.0, 1, 1.2, 1.4, 1.6, 1.7, 1.75, 1.8, 2.0, 2, 2.2, 2.4, and 2.5. Non-restrictively, $I_{\alpha 1}$ may be in any one of the following ranges: $1 \leq I_{\alpha 1} \leq 2.5$, and $1.5 \leq I_{\alpha 1} \leq 2.0$.

The foregoing parameter $I_{\alpha 1}$ may be used to further reflect distribution of orientation directions of the primary particles in the oriented secondary particle that form the angles $\alpha 1$. Controlling $I_{\alpha 1}$ to fall within the foregoing range can enable the primary particles that form the angles $\alpha 1$ to have relatively disordered orientation, thereby better helping inhibit the electrolyte solution from infiltrating into the grain boundaries of the secondary particle, and better helping improve the actual gram capacity and the cycle life of the positive electrode active material.

In some implementations, the positive electrode active material satisfies one or more of the following features (any numerical parameter in the following features may alternatively be selected from any suitable value or range in the context):

$D_v50$ of the positive electrode active material ranges from 8 μm to 11 μm, and optionally ranges from 9 μm to 10 μm;
diameters of the primary particles in the oriented secondary particle range from 100 nm to 1600 nm, optionally range from 400 nm to 1500 nm;
a particle size distribution parameter SPAN of the positive electrode active material satisfies the following formula: $SPAN=(D_v90-D_v10)/D_v50$, where $1.1 \leq SPAN \leq 1.4$; and optionally, $1.2 \leq SPAN \leq 1.3$.

In some implementations, $D_v50$ of the positive electrode active material ranges from 8 μm to 11 μm, and optionally ranges from 9 μm to 10 μm. Non-restrictively, $D_v50$ of the positive electrode active material may be any one of the following values or be selected from an interval formed by any two of the following values: 8 μm, 8.5 μm, 9 μm, 9.5 μm, 10 μm, 10.5 μm, and 11 μm.

Adjusting $D_v50$ of the positive electrode active material to fall within the foregoing range can enable particles in the positive electrode active material to have a more proper particle size distribution, thereby having a more proper specific surface area, to help not only inhibit a side reaction but also have a relatively short active ion transport distance, so that the secondary battery has good cycle performance and dynamics performance.

In the context of the present application, the cumulative volume distribution particle size $D_vN$ (where N represents any value selected from 0 to 100) can be used to characterize the particle size of the material, and refers to the corresponding particle size when the cumulative volume distribution percentage of the material reaches N%, where the volume percentage of particles with a particle size of not greater than $D_vN$ is N%. $D_vN$ can be obtained from a cumulative volume distribution curve of the particle size of the material. Unless otherwise specified, the cumulative volume distribution curve starts accumulation from zero from the small particle size side. A description is provided below by using $D_v90$, $D_v50$, and $D_v10$ as an example. In the present application, unless otherwise specified, $D_v90$ corresponds to a particle size at which the cumulative volume distribution percentage of the material reaches 90%, and the parameter indicates that the particle size of particles accounting for 90% by volume of the material is not greater than $D_v90$ and the particle size of particles accounting for 10% by volume of the material is greater than $D_v90$. In the present application, unless otherwise specified, $D_v50$ corresponds to a particle size at which the cumulative volume distribution percentage of the material reaches 50%, and the parameter indicates that the particle size of particles accounting for 50% by volume of the material is not greater than $D_v50$ and the particle size of particles accounting for 50% by volume of the material is greater than $D_v50$. In the present application, unless otherwise specified, $D_v10$ corresponds to a particle size at which the cumulative volume distribution percentage of the material reaches 10%.

$D_n10$ can be obtained from a cumulative number distribution curve of the particle size of the material. Unless otherwise specified, the cumulative number distribution curve starts accumulation from zero from the small particle size side. In the present application, unless otherwise specified, $D_n10$ corresponds to a particle size at which the cumulative number distribution percentage of the material reaches 10%.

The meanings of $D_v90$, $D_v50$, $D_v10$, and $D_n10$ of the positive electrode active material can be understood by those skilled in the art, and can be measured by instruments and methods known in the art. For example, they can be conveniently measured with reference to GB/T 19077-2016 Particle Size Distribution - Laser Diffraction Methods by using a laser particle size analyzer, for example, Mastersizer 2000E laser particle size analyzer from Malvern Instruments Co., Ltd., or LS-909 laser particle size analyzer (Omec Instruments). Further, for the laser particle size analyzer of equipment model: MasterSizer 2000 (MasterSizer 2000), test may be made with reference to the standard procedure: GB/T19077-2016/ISO 13320:2009.

In some implementations, diameters of at least a part of the primary particles in the oriented secondary particle are in a range of 100 nm to 1600 nm, optionally in a range of 200 nm to 1500 nm, and further optionally in a range of 400 nm to 1500 nm. Non-restrictively, diameters of at least a part of the primary particles in the oriented secondary particle are in a

range formed by any two of the following values: 100 nm, 150 nm, 200 nm, 250 nm, 300 nm, 350 nm, 400 nm, 450 nm, 500 nm, 600 nm, 700 nm, 800 nm, 900 nm, 1000 nm, 1100 nm, 1200 nm, 1300 nm, 1400 nm, 1500 nm, and 1600 nm. Non-restrictively, diameters of at least a part of the primary particles in the oriented secondary particle are in any one of the following ranges: 100 nm to 500 nm, 200 nm to 500 nm, 400 nm to 1600 nm, 400 nm to 1500 nm, 400 nm to 1400 nm, 400 nm to 1350 nm, 400 nm to 1200 nm, 400 nm to 1000 nm, 450 nm to 1600 nm, 450 nm to 1500 nm, 450 nm to 1400 nm, 450 nm to 1350 nm, 450 nm to 1200 nm, and 450 nm to 1000 nm.

In some implementations, diameters of at least 80% of the primary particles in the oriented secondary particle are in a range of 100 nm to 1600 nm, optionally in a range of 200 nm to 1500 nm, and further optionally in a range of 400 nm to 1500 nm. Non-restrictively, diameters of at least 80% of the primary particles in the oriented secondary particle are in a range formed by any two of the following values: 100 nm, 150 nm, 200 nm, 250 nm, 300 nm, 350 nm, 400 nm, 450 nm, 500 nm, 600 nm, 700 nm, 800 nm, 900 nm, 1000 nm, 1100 nm, 1200 nm, 1300 nm, 1400 nm, 1500 nm, and 1600 nm. Non-restrictively, diameters of at least 80% of the primary particles in the oriented secondary particle are in any one of the following ranges: 100 nm to 500 nm, 200 nm to 500 nm, 400 nm to 1600 nm, 400 nm to 1500 nm, 400 nm to 1400 nm, 400 nm to 1350 nm, 400 nm to 1200 nm, 400 nm to 1000 nm, 450 nm to 1600 nm, 450 nm to 1500 nm, 450 nm to 1400 nm, 450 nm to 1350 nm, 450 nm to 1200 nm, and 450 nm to 1000 nm.

In some implementations, diameters of the primary particles in the oriented secondary particle range from 100 nm to 1600 nm, optionally range from 200 nm to 1500 nm, and further optionally range from 400 nm to 1500 nm. Non-restrictively, diameters of the primary particles in the oriented secondary particle may alternatively be any one of the following values or be selected from an interval formed by any two of the following values: 100 nm, 150 nm, 200 nm, 250 nm, 300 nm, 350 nm, 400 nm, 450 nm, 500 nm, 600 nm, 700 nm, 800 nm, 900 nm, 1000 nm, 1100 nm, 1200 nm, 1300 nm, 1400 nm, 1500 nm, and 1600 nm. Non-restrictively, diameters of the primary particles in the oriented secondary particle may alternatively be in any one of the following ranges: 100 nm to 500 nm, 200 nm to 500 nm, 400 nm to 1600 nm, 400 nm to 1500 nm, 400 nm to 1400 nm, 400 nm to 1350 nm, 400 nm to 1200 nm, 400 nm to 1000 nm, 450 nm to 1600 nm, 450 nm to 1500 nm, 450 nm to 1400 nm, 450 nm to 1350 nm, 450 nm to 1200 nm, and 450 nm to 1000 nm.

In the present application, unless otherwise specified, the "diameter of the primary particle in the oriented secondary particle" is a maximum length of lengths of the primary particle in all directions.

In the present application, non-restrictively, the diameter of the primary particle in the oriented secondary particle may be analyzed according to a view of the cross section passing through the center of the oriented secondary particle. As described above, the cross section may be obtained by using an ion polishing cross-section morphology analysis method, and may be analyzed statistically with reference to a microscopic morphology observation method (such as SEM). The diameter of the primary particle may be measured according to the longest axis in a cross section of the primary particle in a view of a cross section passing through the center of the oriented secondary particle.

Adjusting the diameters of the primary particles in the oriented secondary particle to fall within the foregoing range helps control the active crystal face proportion of the primary particles, so that the lithium-ion de-intercalation dynamics of the primary particles is further improved.

In some implementations, values L of at least 80% of the primary particles in the oriented secondary particle are in a range of 400 nm to 1500 nm, optionally in a range of 400 nm to 1500 nm, and further optionally in a range of 400 nm to 1400 nm. Non-restrictively, values L of at least 80% of the primary particles in the oriented secondary particle are in a range formed by any two of the following values: 400 nm, 450 nm, 500 nm, 600 nm, 700 nm, 800 nm, 900 nm, 1000 nm, 1100 nm, 1200 nm, 1300 nm, 1400 nm, and 1500 nm. Non-restrictively, values L of at least 80% of the primary particles in the oriented secondary particle are in any one of the following ranges: 400 nm to 1600 nm, 400 nm to 1500 nm, 400 nm to 1400 nm, 400 nm to 1350 nm, 400 nm to 1200 nm, 400 nm to 1000 nm, 450 nm to 1600 nm, 450 nm to 1500 nm, 450 nm to 1400 nm, 450 nm to 1350 nm, 450 nm to 1200 nm, and 450 nm to 1000 nm.

In some implementations, values L of the primary particles in the oriented secondary particle are in a range of 400 nm to 1500 nm, optionally in a range of 400 nm to 1500 nm, and further optionally in a range of 400 nm to 1400 nm. Non-restrictively, values L of the primary particles in the oriented secondary particle are in a range formed by any two of the following values: 400 nm, 450 nm, 500 nm, 600 nm, 700 nm, 800 nm, 900 nm, 1000 nm, 1100 nm, 1200 nm, 1300 nm, 1400 nm, and 1500 nm. Non-restrictively, values L of the primary particles in the oriented secondary particle are in any one of the following ranges: 400 nm to 1600 nm, 400 nm to 1500 nm, 400 nm to 1400 nm, 400 nm to 1350 nm, 400 nm to 1200 nm, 400 nm to 1000 nm, 450 nm to 1600 nm, 450 nm to 1500 nm, 450 nm to 1400 nm, 450 nm to 1350 nm, 450 nm to 1200 nm, and 450 nm to 1000 nm.

In some implementations, values W of at least 80% of the primary particles in the oriented secondary particle are in a range of 100 nm to 800 nm, optionally in a range of 200 nm to 700 nm, and further optionally in a range of 200 nm to 600 nm. Non-restrictively, values W of at least 80% of the primary particles in the oriented secondary particle are in a range formed by any two of the following values: 100 nm, 150 nm, 200 nm, 250 nm, 300 nm, 350 nm, 400 nm, 450 nm, 500 nm, 600 nm, 650 nm, 700 nm, 750 nm, and 800 nm. Non-restrictively, values W of at least 80% of the primary particles in the oriented secondary particle are in any one of the following ranges: 100 nm to 700 nm, 200 nm to 800 nm, 200 nm to 600 nm, 250 nm to 800 nm, 250 nm to 700 nm, and 250 nm to 600 nm.

In some implementations, values W of the primary particles in the oriented secondary particle are in a range of 100 nm to 800 nm, optionally in a range of 200 nm to 700 nm, and further optionally in a range of 200 nm to 600 nm. Non-restrictively, values W of the primary particles in the oriented secondary particle are in a range formed by any two of the following values: 100 nm, 150 nm, 200 nm, 250 nm, 300 nm, 350 nm, 400 nm, 450 nm, 500 nm, 600 nm, 650 nm, 700 nm, 750 nm, and 800 nm. Non-restrictively, values W of the primary particles in the oriented secondary particle are in any one of the following ranges: 100 nm to 700 nm, 200 nm to 800 nm, 200 nm to 600 nm, 250 nm to 800 nm, 250 nm to 700 nm, and 250 nm to 600 nm.

In some implementations, a particle size distribution parameter SPAN of the positive electrode active material satisfies $1.1 \leq SPAN \leq 1.4$, and optionally $1.2 \leq SPAN \leq 1.3$. Non-restrictively, the particle size distribution parameter SPAN of the positive electrode active material may alternatively be any one of the following values or be selected from an interval formed by any two of the following values: 1.1, 1.15, 1.2, 1.25, 1.3, 1.35, and 1.4.

Adjusting the particle size distribution parameter SPAN of the positive electrode active material to fall within the foregoing range helps make large particles and small particles in the positive electrode active material have proper volume proportions respectively, so that the positive electrode active material has a high powder compaction density while having a high capacity, to help maximize the volumetric energy density on the positive electrode side. The particles are designed through matching between large and small particles, so that the formed polycrystalline material can increase the volumetric energy density of the positive electrode material.

In some implementations, the positive electrode active material satisfies one or more of the following features (any numerical parameter in the following features may alternatively be selected from any suitable value or range in the context):

$D_v90$ of the positive electrode active material satisfies: $15\ \mu m \leq D_v90 \leq 18\ \mu m$, and optionally $16\ \mu m \leq D_v90 \leq 17\ \mu m$;
$D_v10$ of the positive electrode active material satisfies: $4\ \mu m \leq D_v10 \leq 6\ \mu m$, and optionally $4.5\ \mu m \leq D_v10 \leq 5.5\ \mu m$;
$D_n10$ of the positive electrode active material satisfies: $D_n10 \geq 2\ \mu m$.

In some implementations, $D_v90$ of the positive electrode active material satisfies: $15\ \mu m \leq D_v90 \leq 18\ \mu m$, and optionally $16\ \mu m \leq D_v90 \leq 17\ \mu m$. Non-restrictively, $D_v90$ of the positive electrode active material may alternatively be any one of the following values or be selected from an interval formed by any two of the following values: 15 μm, 15.5 μm, 16 μm, 16.5 μm, 17 μm, 17.5 μm, and 18 μm.

Controlling $D_v90$ of the positive electrode active material to fall within the foregoing range helps control large particles in the material to have a proper volume proportion, and helps control a specific surface area, to inhibit a side reaction.

In some implementations, $D_v10$ of the positive electrode active material satisfies: $4\ \mu m \leq D_v10 \leq 6\ \mu m$, and optionally $4.5\ \mu m \leq D_v10 \leq 5.5\ \mu m$. Non-restrictively, $D_v10$ of the positive electrode active material may alternatively be any one of the following values or be selected from an interval formed by any two of the following values: 4 μm, 4.5 μm, 5 μm, 5.5 μm, and 6 μm.

Controlling $D_v10$ of the positive electrode active material to fall within the foregoing range helps control small particles in the material to have a proper volume proportion, and helps improve a compaction density of the material.

In some implementations, $D_n10$ of the positive electrode active material satisfies: $D_n10 \geq 2\ \mu m$.

Controlling $D_n10$ of the positive electrode active material to fall within the foregoing range can control the quantity of small particles in the material to fall within a more proper range, to help control a more proper specific surface area, thereby improving the storage life of the battery.

In some implementations, in the oriented secondary particle, the positive electrode active substance includes a layered lithium-ion active material.

When the positive electrode active substance in the oriented secondary particle includes the layered lithium-ion active material, the positive electrode active material including the oriented secondary particle may be obtained by using, but not limited to, the method exemplified in the present application.

A non-limiting example of the layered lithium-ion active material may include a layered lithium transition metal oxide. Non-restrictively, an example of the layered lithium-ion active material may include a lithium-nickel-containing composite oxide.

In some implementations, in the oriented secondary particle, the positive electrode active substance includes a lithium-nickel-containing composite oxide.

In the present application, unless otherwise specified, the "lithium transition metal oxide" refers to a lithium-ion active material including a transition metal element.

In the present application, unless otherwise specified, the "lithium-nickel-containing composite oxide" refers to a lithium-ion active material including a nickel element. It may be understood that the lithium-nickel-containing composite oxide includes at least a lithium element, a nickel element, and an oxygen element, and further, may or may not include a transition metal element of another type, such as Zr, Al, or Sr. The lithium-nickel-containing composite oxide may further

include or does not include a non-metal element such as B or C.

By introducing the lithium-nickel-containing composite oxide to the positive electrode active substance of the oriented secondary particle, introduction of the nickel element helps to improve the energy density of the positive electrode active material, and further helps to improve the power performance of the battery.

In the present application, unless otherwise specified, a molar ratio of a nickel element to an oxygen (O) element in the lithium-nickel-containing composite oxide is denoted as $Q_{Ni/O}$.

In some implementations, in the oriented secondary particle, $0.3 \leq Q_{Ni/O} \leq 0.5$, and optionally $0.4 \leq Q_{Ni/O} \leq 0.5$. Non-restrictively, $Q_{Ni/O}$ in the oriented secondary particle may alternatively be any one of the following values or be selected from an interval formed by any two of the following values: 0.3, 0.35, 0.4, 0.45, and 0.5.

In the present application, unless otherwise specified, a molar ratio of a nickel element to a lithium (Li) element in the lithium-nickel-containing composite oxide is denoted as $Q_{Ni/Li}$.

In some implementations, in the oriented secondary particle, $0.6 \leq Q_{Ni/Li} \leq 1$, and optionally $0.8 \leq Q_{Ni/Li} \leq 1$. Non-restrictively, $Q_{Ni/Li}$ in the oriented secondary particle may alternatively be any one of the following values or be selected from an interval formed by any two of the following values: 0.6, 0.65, 0.66, 2/3, 0.7, 0.75, 0.8, 0.85, 0.9, 0.95, and 1.

Controlling the molar ratio ($Q_{Ni/O}$) of the nickel element to the oxygen element in the lithium-nickel-containing composite oxide and/or the molar ratio ($Q_{Ni/Li}$) of the nickel element to the lithium element in the lithium-nickel-containing composite oxide to fall within the foregoing range can enable the positive electrode active substance to have a high nickel content, to better help improve the energy density of the positive electrode active material.

In some implementations, the lithium-nickel-containing composite oxide includes at least one of a cobalt (Co) element and an M element, where the M element is at least one of an Mn element and an Al element. In some implementations, the lithium-nickel-containing composite oxide includes a Co element and an Mn element. In some implementations, the lithium-nickel-containing composite oxide includes a Co element and an Al element.

In some implementations, the lithium-nickel-containing composite oxide is a lithium-nickel-cobalt-manganese-containing composite oxide.

In the present application, unless otherwise specified, the "lithium-nickel-cobalt-manganese-containing composite oxide" refers to a lithium-ion active material including a nickel element, a cobalt element, and a manganese element. It may be understood that the lithium-nickel-cobalt-manganese-containing composite oxide includes at least a lithium element, a nickel element, a cobalt element, a manganese element, and an oxygen element, and further, may or may not include a transition metal element of another type, such as Zr, Al, or Sr. The lithium-nickel-containing composite oxide may further include or does not include a non-metal element such as B or C.

In some implementations, the lithium-nickel-containing composite oxide includes a doping element, $Q_{Ni/O} < 0.5$, and the doping element may include, but not limited to, at least one element of Zr, Al, B, Sr, and Ca. In some implementations, the doping element is selected from one or more of Zr, Al, B, Sr, and C. In some implementations, the doping element is a combination of Zr, Al, B, Sr, and C. $Q_{Ni/O}$ may be, but not limited to, $0.3 \leq Q_{Ni/O} < 0.5$, and optionally $0.4 \leq Q_{Ni/O} < 0.5$.

In some implementations, at least a part of the primary particle includes a particle body and a coating layer on at least a part of a surface of the particle body, the particle body includes the lithium-nickel-containing composite oxide, and the coating layer includes at least one element of Zr, Al, B, Sr, and Ca.

In some implementations, the primary particle includes a particle body and a coating layer on at least a part of a surface of the particle body, the particle body includes the lithium-nickel-containing composite oxide, and the coating layer may include, but not limited to, one or more elements of Zr, Al, B, Sr, and Ca.

In some implementations, the oriented secondary particle satisfies one or more of the following features (any numerical parameter in the following features may alternatively be selected from any suitable value or range in the context):

in the oriented secondary particle, $0.3 \leq Q_{Ni/O} \leq 0.5$, and optionally $0.4 \leq Q_{Ni/O} \leq 0.5$;
in the oriented secondary particle, $0.6 \leq Q_{Ni/Li} \leq 1$, and optionally $0.8 \leq Q_{Ni/Li} \leq 1$;
the lithium-nickel-containing composite oxide includes at least one of a cobalt element and an M element, where the M element is at least one of an Mn element and an Al element;
the lithium-nickel-containing composite oxide includes a doping element, $Q_{Ni/O} < 0.5$, and the doping element includes at least one element of Zr, Al, B, Sr, and Ca; and
at least a part of the primary particle includes a particle body and a coating layer on at least a part of a surface of the particle body, the particle body includes the lithium-nickel-containing composite oxide, and the coating layer includes at least one element of Zr, Al, B, Sr, and Ca.

$Q_{Ni/O}$ and/or $Q_{Ni/Li}$ is controlled to fall within the foregoing range, so that the lithium-nickel-containing composite oxide has a high nickel content, and the energy density of the positive electrode active material can be significantly improved.

The introduction of the cobalt (Co) element into the lithium-nickel-containing composite oxide helps to stabilize a material structure, and helps to improve cycle performance and rate performance of the positive electrode active material.

The introduction of the manganese (Mn) element into the lithium-nickel-containing composite oxide helps reduce costs and improve structural stability of the material.

The introduction of the aluminum (Al) element into the lithium-nickel-containing composite oxide helps improve the cycle stability of the material.

Performing one or more of the foregoing doping modification and the foregoing coating modification on the lithium-nickel-containing composite oxide can achieve one or more aspects of enhancing stability of the material, improving an energy density of the material, and improving a cycle life. For example, the structure of the lithium-nickel-containing composite oxide may be stabilized through bulk-phase doping. For example, a fast-ion conductor coating substance may be disposed on the surface of the lithium-nickel-containing composite oxide, so as to improve an energy density and a cycle life of the material.

In some implementations, $0.3 \leq Q_{Ni/O} \leq 0.5$, and optionally, $0.4 \leq Q_{Ni/O} \leq 0.5$, and reference may be further made to any suitable range in the context; in the oriented secondary particle, the positive electrode active substance includes one or more of a lithium-nickel-cobalt-manganese oxide, a lithium-nickel-cobalt-aluminum oxide, and a modified form of any one of the foregoing substances, where the modified form includes one or more of doping modification and coating modification, a doping element used for the doping modification includes at least one element of Zr, Al, B, Sr, and Ca, and a coating element used for the coating modification includes at least one element of Zr, Al, B, Sr, and Ca; and
a molar ratio $R_{Ni/O}$ of the nickel element to the oxygen element in the positive electrode active substance satisfies $0.4 \leq R_{Ni/O} \leq 0.5$.

In some implementations, the positive electrode active material satisfies one or more of the following features:

$D_v50$ of the positive electrode active material ranges from 8 $\mu$m to 11 $\mu$m, and optionally ranges from 9 $\mu$m to 10 $\mu$m;
diameters of at least 80% of the primary particles in the oriented secondary particle range from 100 nm to 1600 nm, and optionally range from 400 nm to 1500 nm;
a particle size distribution parameter SPAN of the positive electrode active material satisfies the following formula: $SPAN=(D_v90-D_v10)/D_v50$, where $1.1 \leq SPAN \leq 1.4$, and optionally $1.2 \leq SPAN \leq 1.3$.

The positive electrode active substance of the oriented secondary particle may be provided with a ternary positive electrode active substance having a high nickel content and a modified substance of the ternary positive electrode active substance. The modified form may include one or more of doping modification and coating modification, and may be used to obtain a ternary positive electrode active material having a high energy density and a long life. The structure of the ternary positive electrode active substance may be stabilized through bulk-phase doping, and the energy density and the cycle life of the material may be improved by disposing a fast-ion conductor coating substance on the surface of the ternary positive electrode active substance. Controlling the angles $\alpha 1$ and F1 can control the orientation and distribution of the primary particles in the secondary particle of the positive electrode active material, and can take into consideration a balance between inhibition of inside infiltration of the electrolyte solution and optimization of a distance of the lithium-ion transmission path, thereby improving the mass energy density and the lithium-ion diffusion dynamics of the material. Further, by controlling one or more parameters of $D_v50$ of the positive electrode active material, the diameter of the primary particle in the oriented secondary particle, and the particle size distribution parameter SPAN of the positive electrode active material to fall within the foregoing ranges, the foregoing related advantages may be further combined. For example, adjusting the particle size distribution parameter SPAN of the positive electrode active material to fall within the foregoing range helps make large particles and small particles in the positive electrode active material have proper volume proportions respectively, and can further increase the powder compaction density of the material and the volumetric energy density of the positive electrode plate. The secondary particles are designed through matching between large and small particles, so that the formed polycrystalline material can increase the volumetric energy density of the positive electrode material. Still further, the bulk-phase structure and surface stability of the material can be improved by combining the doping and coating modification methods, to achieve a longer cycle life.

In some implementations, in the oriented secondary particle, an average value of L of the inner layer is less than 700 nm (optionally, the average value of L of the inner layer is less than 660 nm), and an average value of L of the outer layer is greater than or equal to 720 nm (optionally, the average value of L of the outer layer is greater than or equal to 750 nm).

Non-restrictively, in the oriented secondary particle, the average value of L of the inner layer may be any one of the following values, or less than or equal to any one of the following values, or less than any one of the following values: 690 nm, 680 nm, 670 nm, 660 nm, and 650 nm.

Non-restrictively, in the oriented secondary particle, the average value of L of the outer layer may be any one of the following values, or greater than or equal to any one of the following values, or greater than any one of the following values: 720 nm, 730 nm, 740 nm, 750 nm, 760 nm, 770 nm, and 780 nm.

In some implementations, in the oriented secondary particle, an average value of L of the inner layer is less than

660 nm, and an average value of L of the outer layer is greater than or equal to 750 nm.

For the positive electrode active material whose positive electrode active substance in the oriented secondary particle includes the lithium-nickel-containing composite oxide, by controlling the average values of L of the inner layer and the outer layer in the oriented secondary particle to fall within the foregoing ranges, the outer layer can have relatively fast de-intercalation efficiency of active ions, and the inner layer can have a larger angle to better inhibit infiltration of an electrolyte solution into grain boundaries, thereby better helping comprehensively improve the actual energy density, the cycle performance, and the dynamics performance of the battery.

In the present application, unless otherwise specified, the "secondary battery" includes a battery cell.

In the present application, unless otherwise specified, a "battery cell" refers to a basic unit that can implement interconversion of chemical energy and electric energy. Generally, the battery cell includes a positive electrode plate, a negative electrode plate, an electrolyte, and a separator. During the charging and discharging process of the battery, active ions are intercalated and de-intercalated back and forth between the positive electrode plate and the negative electrode plate. The electrolyte serves to conduct ions between the positive electrode plate and the negative electrode plate. The separator is arranged between the positive electrode plate and the negative electrode plate and mainly serves to prevent a short circuit between the positive and negative electrodes while allowing ions to pass through.

In some implementations, the secondary battery further includes a negative electrode plate, a separator, and an electrolyte solution, and the separator is located between the positive electrode plate and the negative electrode plate.

In some implementations, the secondary battery is a lithium-ion secondary battery.

In some implementations, the secondary battery is a lithium-ion secondary battery, and the electrolyte salt may include an electrolyte lithium salt.

The following is some other descriptions about the positive electrode plate.

The positive electrode plate includes a positive electrode current collector and a positive electrode active material layer arranged on at least one surface of the positive electrode current collector. The positive electrode active material layer includes a positive electrode active material. It may be understood that the positive electrode active material includes the foregoing oriented secondary particle.

The positive electrode active material includes a positive electrode active substance.

The positive electrode active material includes secondary particles, and the secondary particle is an agglomerated particle including a plurality of primary particles; and the primary particles include a positive electrode active substance.

For the positive electrode active substance in the positive electrode active material, reference may be made to, but not limited to, the foregoing descriptions.

Non-restrictively, a weight percentage of the positive electrode active material in the positive electrode active material layer may be greater than or equal to 80 wt%, and further may be greater than or equal to 90 wt%.

In some implementations, the positive electrode active material layer may alternatively be made of a layered lithium-ion active material that may be used for a battery and well known in the art.

In some implementations, the positive electrode active material layer may alternatively be made of a lithium-nickel-containing composite oxide that may be used for a battery and well known in the art.

As a non-limiting example, the layered lithium-ion active material may include one or more of the following materials: a lithium-nickel-containing composite oxide, and a modified compound thereof. However, the present application is not limited to these materials. These positive electrode active substances may be used alone, or more than two thereof may be used jointly. Examples of lithium-nickel-containing composite oxide may be, but are not limited to, one or more selected from the group consisting of lithium cobalt oxide, lithium-nickel-containing composite oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and modified compounds thereof. A non-limiting example of the lithium-cobalt oxide may include $LiCoO_2$. A non-limiting example of the lithium-nickel-containing composite oxide may include $LiNiO_2$. A non-limiting example of the lithium manganese oxide may include $LiMnO_2$, $LiMn_2O_4$, or the like. A non-limiting example of the lithium-nickel-cobalt-manganese oxide may include $LiNi_{1/3}Co_{1/3}Mn_{1/3}O_2$ ($NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), $LiNi_{0.8}Co_{0.1}Mn_{0.1}O_2$ ($NCM_{811}$ for short), or the like. A non-limiting example of the lithium-nickel-cobalt-aluminum oxide may include $LiNi_{0.80}Co_{0.15}Al_{0.05}O_2$.

It may be understood that, the battery will be accompanied by the de-intercalation and consumption of lithium (Li) during the charging and discharging process, and the content of Li in the positive electrode plate varies as the battery is discharged to different states.

In exemplary descriptions of the positive electrode active substance in the present application, unless otherwise specified, the content of Li may be in an initial state of the material, or may be in a non-initial state after a charging and discharging cycle. When the positive electrode active substance is applied to a positive electrode plate in a battery system, after charging and discharging cycles, the content of Li in the positive electrode active substance included in the positive electrode plate usually changes. The content of Li may be measured by using an atomic molar content, but is not limited

thereto. Using an example in which the positive electrode plate is prepared by using a wet method, for "the content of Li is an initial material state", the initial material state refers to a state before being fed to the positive electrode slurry. It may be understood that new materials or new substances obtained by performing proper modification based on the listed positive electrode active substances also fall within the scope of the positive electrode active substances. The foregoing proper modification refers to a modification manner that is acceptable for the positive electrode active substances, whose non-limiting example is coating modification.

In the exemplary description of the positive electrode active substances in the present application, a content of oxygen (O) is merely a theoretical state value. Oxygen released by a lattice causes a change in the atomic molar content of O, and the actual content of O floats. The content of O may be measured by using an atomic molar content, but is not limited thereto.

In some implementations, the positive electrode current collector may be a metal foil or a composite current collector. For example, as the metal foil, an aluminum foil may be used. In the positive electrode current collector, the composite current collector may include a polymer material base layer or a metal layer located on at least one surface of the polymer material base layer. In the positive electrode current collector, the composite current collector can be formed by forming a metal material on a polymer material base layer. In the positive electrode current collector, non-limiting examples of the metal material may include at least one of aluminum, an aluminum alloy, nickel, a nickel alloy, titanium, a titanium alloy, silver, a silver alloy, and the like. Non-restrictively, in the positive electrode current collector, the polymer material base layer may include one or more of polypropylene (PP), polyethylene terephthalate (PET), polybutylene terephthalate (PBT), polystyrene (PS), and polyethylene (PE).

In some implementations, the positive electrode active material layer optionally includes a binder. Non-limiting examples of the binder may include one or more of polyvinylidene difluoride (PVDF), polytetrafluoroethylene (PTFE), a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer and a fluorine-containing acrylate resin. Generally, a weight percentage of the binder in the positive electrode active material layer may range from 0 to 10 wt%, further may range from 0 to 8 wt%, and still further may range from 1 wt% to 5 wt%.

In some implementations, the positive electrode active material layer optionally includes a conductive agent. Non-limiting examples of the conductive agent may include one or more of superconducting carbon, acetylene black, carbon black, Ketjen black, carbon dot, carbon nanotubes, graphene, and carbon nanofibers. Generally, a weight percentage of the conductive agent in the positive electrode active material layer may range from 0 to 10 wt%, further may range from 0 to 8 wt%, and still further may range from 0 to 5 wt%.

In some implementations, the positive electrode plate may be prepared in the following manner: dispersing the above components for preparing the positive electrode plate, for example, the positive electrode active material, the conductive agent, the binder, and any other components, in a solvent to form a positive electrode slurry; and further, coating at least one side surface of the positive electrode current collector with the positive electrode slurry, performing working procedures such as drying and cold pressing, and then obtaining the positive electrode plate. The cold pressing may be performed by using a cold rolling mill. The solvent type in the positive electrode slurry may include, but is not limited to, any one listed in the foregoing examples, for example, may include N-methylpyrrolidone (NMP), and further may be NMP. The surface of the positive electrode current collector coated with the positive electrode slurry may be a single surface of the positive electrode current collector, or two surfaces of the positive electrode current collector. A solid content of the positive electrode slurry may range from 40 wt% to 80 wt%. The viscosity of the positive electrode slurry at the room temperature may be adjusted to 5000 mPa·s to 25000 mPa·s. Based on a single-side coating amount on the positive current collector, when the positive electrode slurry is applied, the application unit surface density based on a dry weight (deducting the solvent) may range from 13 mg/cm$^2$ to 20 mg/cm$^2$. The compaction density of the positive electrode plate may range from 3.0 g/cm$^3$ to 3.6 g/cm$^3$, and optionally range from 3.3 g/cm$^3$ to 3.5 g/cm$^3$.

The "compaction density" used in the present application has a well-known meaning in the art and is one of the reference indicators for the energy density of a material. In the present application, unless otherwise specified, the compaction density of the electrode plate refers to a ratio of the weight to the volume of the electrode active material layer. The compaction density of the positive electrode plate refers to a ratio of the mass to the volume of the positive electrode active material layer. The compaction density of the negative electrode plate refers to a ratio of the mass to the volume of the negative electrode active material layer.

The following is some descriptions about the negative electrode plate.

A negative electrode plate includes a negative electrode current collector and a negative electrode active material layer disposed on at least one surface of the negative electrode current collector. The negative electrode active material layer includes a negative electrode active substance.

Non-restrictively, a weight percentage of the negative electrode active substance in the negative electrode active material layer may be greater than or equal to 80 wt%, and further may be greater than or equal to 90 wt%.

As a non-limiting example, the negative electrode current collector has two opposite surfaces in its own thickness direction, and the negative electrode active material layer is disposed on either or both of the two opposite surfaces of the

negative electrode current collector.

In some implementations, the negative electrode current collector may be a metal foil or a composite current collector. For example, as the metal foil, a copper foil may be used. In the negative electrode current collector, the composite current collector may include a polymer material base layer or a metal layer located on at least one surface of the polymer material base layer. In the negative electrode current collector, the composite current collector can be formed by forming a metal material on a polymer material base layer. In the negative electrode current collector, non-limiting examples of the metal material may include one or more of copper, a copper alloy, nickel, a nickel alloy, titanium, a titanium alloy, silver, a silver alloy, and the like. Non-restrictively, in the negative electrode current collector, the polymer material base layer may include one or more of polypropylene (PP), polyethylene terephthalate (PET), polybutylene terephthalate (PBT), polystyrene (PS), and polyethylene (PE).

In some implementations, the negative electrode active substance may be a negative electrode active substance used in a battery and well known in the art. Non-limiting examples of the negative electrode active substance may include one or more of artificial graphite, natural graphite, soft carbon, hard carbon, silicon-based materials, tin-based materials, lithium titanate, and the like. The silicon-based material may include one or more of elemental silicon, a silicon oxide, a silicon-carbon composite, a silicon-nitrogen composite, and a silicon alloy. The tin-based material may include one or more of elemental tin, a tin oxide, and a tin alloy. However, the present application is not limited to these materials or substances, and other conventional substances that can be used as a negative electrode active substance of a battery may also be used. These negative electrode active substances may be used alone, or more than two thereof may be used jointly.

In some implementations, the negative electrode active substance includes one or more of a carbon-based material, a silicon-based material, a tin-based material, lithium titanate, and a modified form of any one of the foregoing substances, where the modified form includes one or more of doping modification and coating modification. For both the doping modification manner and the coating modification manner, existing modification manners in the art, including, but not limited to, selection of an element type and a doping amount may be used or referred to. The carbon-based material may include, but not limited to, one or more of a graphite material, soft carbon, and hard carbon. The graphite material may include one or more of artificial graphite and natural graphite.

In some implementations, the negative electrode active substance includes a carbon-based material and a silicon-based material. Non-restrictively, a percentage of a mass sum of the carbon-based material and the silicon-based material in a total mass of the negative electrode active substance may be ≥ 80%, optionally ≥ 90%, further optionally ≥ 95%, still further optionally ≥ 96%, or still further optionally 100%. A percentage of a mass sum of the graphite material and the silicon-based material in a total mass of the negative electrode active substance may alternatively be any one of the following percentages, or not less than any one of the following percentages and not greater than 100%, or be selected from an interval formed by any two of the following percentages: 80%, 82%, 83%, 84%, 85%, 86%, 88%, 90%, 92%, 94%, 95%, 96%, and 98%. For the definition of the carbon-based material, reference may be made to the foregoing text. For example, the carbon-based material may be a graphite material. For the content of the carbon-based material, reference may be further made to any suitable implementation in the context.

In some implementations, the negative electrode active substance includes a carbon-based material. Non-restrictively, a mass percentage of the carbon-based material in the negative electrode active substance may be ≥ 80%, optionally ≥ 90%, further optionally ≥ 95%, still further optionally ≥ 96%, or still further optionally 100%. A mass percentage of the carbon-based material in the negative electrode active substance may alternatively be any one of the following percentages, or not less than any one of the following percentages and not greater than 100%, or be selected from an interval formed by any two of the following percentages: 80%, 82%, 83%, 84%, 85%, 86%, 88%, 90%, 92%, 94%, 95%, 96%, and 98%. For the definition of the carbon-based material, reference may be made to the foregoing text. For example, the carbon-based material may be a graphite material.

In some implementations, the negative electrode active material layer optionally includes a binder. Non-restrictively, the binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). Non-restrictively, a weight percentage of the binder in the negative electrode active material layer may range from 0 wt% to 20 wt%, further may range from 0 wt% to 10 wt%, still further may range from 0 to 5 wt%, still further may range from 1 wt% to 5 wt%, and still further optionally range from 1 wt% to 3 wt%.

In some implementations, the negative electrode active material layer optionally includes a conductive agent. Non-restrictively, the conductive agent may include one or more of superconducting carbon, acetylene black, carbon black, Ketjen black, carbon dots, carbon nanotubes, graphene, and carbon nanofibers. Non-restrictively, a weight percentage of the conductive agent in the negative electrode active material layer may range from 0 wt% to 15 wt%, further optionally range from 0 wt% to 10 wt%, still further optionally range from 0 wt% to 5 wt%.

In some implementations, the negative electrode active material layer optionally includes another adjuvant, such as a thickener (for example, sodium carboxymethyl cellulose (CMC-Na)). Non-restrictively, a weight percentage of the another adjuvant in the negative electrode active material layer may range from 0 wt% to 15 wt%, further optionally range from 0 wt% to 10 wt%, still further optionally range from 0 wt% to 5 wt%, and still further optionally range from 0 wt% to 3

wt%.

In some implementations, the negative electrode plate may be prepared in the following manner: dispersing the above-mentioned components for preparing the negative electrode plate, for example, the negative electrode active substance, the conductive agent, the binder, and any other components, in a solvent (a non-limiting example of the solvent is deionized water) to form a negative electrode slurry; and further, coating at least one side surface of the negative electrode current collector with the negative electrode slurry, performing working procedures such as drying and cold pressing, and then obtaining the negative electrode plate. The cold pressing may be performed by using a cold rolling mill. The surface of the negative electrode current collector coated with the negative electrode slurry may be a single surface of the negative electrode current collector, or two surfaces of the negative electrode current collector. A solid content of the negative electrode slurry may range from 30 wt% to 70 wt%, and optionally range from 40 wt% to 60 wt%. The viscosity of the negative electrode slurry at the room temperature may be adjusted to 2000 mPa·s to 10000 mPa·s, and optionally 3000 mPa·s to 10000 mPa·s. Based on a single-side coating amount on the negative current collector, when the negative electrode slurry is applied, the application unit surface density based on a dry weight (deducting the solvent) may range from 6.5 mg/cm$^2$ to 13 mg/cm$^2$. The compaction density of the negative electrode plate may range from 1.0 g/cm$^3$ to 2.0 g/cm$^3$, and optionally range from 1.0 g/cm$^3$ to 1.8 g/cm$^3$.

The following is an exemplary description of the electrolyte.

The electrolyte serves to conduct ions between the positive electrode plate and the negative electrode plate. Unless otherwise specified, the electrolyte includes a liquid electrolyte.

In some implementations, the electrolyte is an electrolyte solution. The electrolyte solution includes an electrolyte salt and a solvent.

In some implementations, the electrolyte solution is a non-aqueous electrolyte. The non-aqueous electrolyte may include an electrolyte salt and a solvent.

The concentration of the electrolyte in the electrolyte solution may usually range from 0.5 mol/L to 5 mol/L, and is, for example, but not limited to, 0.5 mol/L, 1 mol/L, or 1.5 mol/L.

In some implementations, the electrolyte salt includes an electrolyte lithium salt. Non-restrictively, the electrolyte lithium salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium triflate (LiTFS), lithium difluorophosphate ($LiPO_2F_2$), lithium difluoro(oxalato) borate (LiDFOB), lithium bis(oxalato)borate (LiBOB), lithium difluorobis(oxalate) phosphate (LiDFOP), and lithium tetrafluoro(oxalato)phosphate (LiTFOP).

In some implementations, the secondary battery is a lithium-ion secondary battery, and the electrolyte salt may include an electrolyte lithium salt.

In some implementations, the solvent in the non-aqueous electrolyte may include one or more of ethylene carbonate (EC,

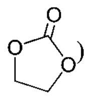 )

, propylene carbonate (PC,

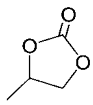

), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC,

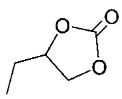

), fluoroethylene carbonate (FEC), methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some implementations, the electrolyte solution optionally includes an additive. For example, the additive can include a negative electrode film-forming additive and a positive electrode film-forming additive and can further include

additives that can improve some properties of the battery, for example, an additive that improves the overcharging performance of the battery and an additive that improves the high- or low-temperature performance of the battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), and the like.

In some implementations, the electrolyte solution includes a solvent, and the solvent includes at least one type of cyclic carbonate and at least two types of chain carbonate.

In some implementations, in the electrolyte solution, the solvent includes $C_{3-6}$ cyclic carbonate, $C_{4-10}$ first chain carbonate, and $C_{3-8}$ second chain carbonate in a volume ratio of 1:(0.9 to 1.1):(0.9 to 1.1), where the number of carbon atoms of the first chain carbonate is greater than the number of carbon atoms of the second chain carbonate.

In some implementations, in the electrolyte solution, the $C_{3-6}$ cyclic carbonate includes ethylene carbonate, the $C_{4-10}$ first chain carbonate includes diethyl carbonate, and the $C_{3-8}$ second chain carbonate includes dimethyl carbonate.

The following is an exemplary description of the separator.

In some implementations, the secondary battery further includes a separator. The type of the separator is not specifically limited in the present application, and any well-known separator with a porous structure having good chemical stability and mechanical stability may be selected.

In some implementations, the material of the separator may include one or more of glass fiber, non-woven cloth, polyethylene, polypropylene, and polyvinylidene difluoride. The separator can be either a single-layer thin film or a multi-layer composite thin film without special limitations. When the separator is a multi-layer composite thin film, the materials of the layers can be the same or different without special limitations.

In some implementations, the thickness of the separator ranges from 6 $\mu$m to 40 $\mu$m, and optionally ranges from 12 $\mu$m to 20 $\mu$m.

In some implementations, an electrode assembly may be manufactured by a positive electrode plate, a negative electrode plate, and a separator by a winding process or a laminating process.

In some implementations, a secondary battery may include an outer package. The outer package can be used to encapsulate the above electrode assembly and electrolyte.

In some implementations, the outer packaging of the secondary battery may be a hard case, such as a hard plastic case, an aluminum case, or a steel case. The outer package of the secondary battery may also be a soft package, for example, a pouch-type soft package. The material of the soft pack may be plastic, and further, a non-limiting example of the plastic may include one or more of polypropylene, polybutylene terephthalate, and polybutylene succinate.

The secondary battery includes at least one battery cell. The secondary battery may include one or more battery cells.

A shape of the battery cell is not particularly limited in the present application, and may be cylindrical, prismatic, or any other shape. FIG. 3 shows a prismatic battery cell 5 as an example.

In some implementations, referring to FIG. 4, the outer package can include a case 51 and a cover plate 53. The case 51 can include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator may be made into an electrode assembly 52 by a winding process or a laminating process. The electrode assembly 52 is enclosed in the accommodating cavity. An electrolyte solution infiltrates into the electrode assembly 52. The number of electrode assemblies 52 contained in the battery cell 5 may be one or more, and may be selected by a person skilled in the art according to actual requirements.

In some implementations, the liquid injection coefficient of the electrolyte solution is greater than or equal to 1.6 g/Ah.

The secondary battery may be a battery module 4 or a battery pack 1.

The battery module includes at least one battery cell. The quantity of battery cells contained in the battery module can one or more, and the proper number can be selected by those skilled in the art based on the application and capacity of the battery module.

FIG. 5 shows a battery module 4 as an example. Referring to FIG. 5, in the battery module 4, multiple battery cells 5 may be sequentially disposed in the length direction of the battery module 4. Certainly, the plurality of battery cells may alternatively be arranged in any other manner. The plurality of battery cells 5 can be further fixed by fasteners.

Optionally, the battery module 4 may further include a housing with an accommodating space, and the plurality of battery cells 5 are accommodated in the accommodating space.

In some implementations, the above battery module can be further assembled into a battery pack. The quantity of battery modules contained in the battery pack can be one or more, and the proper number can be selected by those skilled in the art according to the application and capacity of the battery pack.

FIG. 6 and FIG. 7 show a battery pack 1 as an example. Referring to FIG. 6 and FIG. 7, the battery pack 1 may include a battery box and a plurality of battery modules 4 arranged in the battery box. The battery box includes an upper box

2 and a lower box 3. The upper box 2 can cover the lower box 3 to form a closed space for accommodating the battery modules 4. The plurality of battery modules 4 may be arranged within the battery box in any manner.

A second aspect of the present application provides a positive electrode active material, including the foregoing oriented secondary particle.

In some implementations, the positive electrode active material includes secondary particles, and the secondary particle is an agglomerated particle including primary particles; and the primary particles include a positive electrode active substance;

in any one of the secondary particles, a direction from a center of the secondary particle to a surface is denoted as an X direction; an X direction passing through a center of any one of the primary particles is denoted as a longitudinal direction; and in any one of the primary particles, a longest axis of the primary particle is denoted as an a-axis; and the secondary particles include oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, where $15° \leq \alpha 1 \leq 45°$, and $F1 \geq 60\%$.

The positive electrode plate prepared by using the foregoing positive electrode active material may be used to prepare a secondary battery having a high energy density, a good dynamics performance, and a long cycle life. Using the orientation angle and the quantity proportion of the primary particles included in the oriented secondary particle in the positive electrode active material can inhibit infiltration of the electrolyte solution into the grain boundary of the secondary particle, to help inhibit a side reaction between the electrolyte solution and the surface of the positive electrode active substance, can improve the actual gram capacity and cycle life of the positive electrode active material, and can further implement a relatively short active ion de-interposition path, to help promote rapid de-interposition of the active ions during a charging/discharging process, which can improve the actual energy density of the secondary battery, and can enable the secondary battery to have a good dynamics performance.

In some implementations, the positive electrode active material in the secondary battery described in the first aspect of the present application is provided.

Another aspect of the present application provides a method for preparing a positive electrode active material, which can be used to prepare the foregoing positive electrode active material.

In some implementations, provided is a method for preparing a positive electrode active material, including the following steps:

S10: A precursor was prepared.

S20: A first mixture including the precursor and a lithium source was subject to the first time of sintering at a temperature T1 to obtain a first sintered product, and then a second mixture including the first sintered product was subject to the second time of sintering at a temperature T2 to obtain a positive electrode active material, where T1 > T2.

In step S10, the type of the transition metal element in the precursor may be selected according to a required crystal structure of the positive electrode active material, and then a suitable metal source was selected.

In step S10, the precursor may be prepared by using, but not limited to, a co-precipitation method.

In the foregoing implementation, the temperature T1 is higher than the temperature T2. Therefore, a temperature condition in which the first time of sintering is performed may be denoted as a "high-temperature condition", and a temperature condition in which the second time of sintering is performed may be denoted as a "low-temperature condition".

In some implementations, the temperature T1 at which the first time of sintering is performed may range from 700°C to 800°C, and is, for example, 700°C, 720°C, 740°C, 750°C, 760°C, 780°C, or 800°C, or may be selected from a range consisting of any two of the foregoing temperatures. Further, a sintering time for performing the first time of sintering may range from 15 h to 30 h, and is, for example, 15 h, 16 h, 18 h, 20 h, 22 h, 24 h, 25 h, 26 h, 28 h, or 30 h, or may be selected from a range consisting of any two of the foregoing time lengths.

In some implementations, the temperature T2 at which the second time of sintering is performed may range from 200°C to 500°C, and is, for example, 200°C, 250°C, 300°C, 350°C, 400°C, 450°C, or 500°C, or may be selected from a range consisting of any two of the foregoing temperatures. Further, a sintering time for performing the second time of sintering may range from 3h to 8h, and is, for example, 3 h, 4 h, 5 h, 6 h, 7 h, or 8 h, or may be selected from a range consisting of any two of the foregoing time lengths.

After step S10, a laser particle size analyzer may be used for testing, to obtain particle sizes and SPAN values of precursor particles, so as to select a precursor having a particle size range and a SPAN value to perform step S20.

Unless otherwise specified, at least one process of the first time of sintering and the second time of sintering is performed in an oxygen containing atmosphere. In some implementations, both the first time of sintering and the second time of sintering are performed in an oxygen gas atmosphere.

In step S20, a molar ratio of the precursor to the lithium source may be 1:(1.03 to 1.07) based on OH, for example, but not limited to, 1:1.03, 1:1.04, 1:1.05, 1:1.06, or 1:1.07. Considering a loss of lithium in a sintering process, generally, there is a slightly excessive amount of lithium.

In step S20, when the first time of sintering is performed, the first mixture may further include a dopant, used for introducing a doping element. It may be understood that, in a case of a common doping amount, introduction of the doping element usually does not affect a crystal structure type of grains.

In step S20, when the second time of sintering is performed, the second mixture may further include a coating agent, used for introducing a coating element. It may be understood that introduction of the coating element may form a coating layer on at least a part of a surface of the particle obtained from the first sintered product.

Non-restrictively, based on the precursor, both the doping modification and the coating modification may be performed.

Using an example in which the positive electrode active material includes a lithium-nickel-containing composite oxide, in some implementations, provided is a method for preparing a positive electrode active material, including step S10 and step S20, where step S10 is S100, and step S20 is S200.

S100: A nickel-containing precursor was prepared.

A method including the following steps may be used to prepare the nickel-containing precursor: According to an element composition in a target chemical formula of the positive electrode active material, a metal source including a nickel source is dissolved in water according to a needed type and a needed amount, to formulate a metal solution; and the metal solution, a complexing agent, and a precipitant are mixed, and the mixture is subject to a co-precipitation reaction, solid-liquid separation, washing, and drying in a dispersion condition, to obtain the nickel-containing precursor. The nickel-containing precursor is a corresponding metal hydroxide.

In step S100, the type of the metal source is controlled, and the grain structure and the particle morphology in the positive electrode active material can be controlled by controlling the type of the transition metal element in the nickel-containing precursor. For example, the metal source including a nickel source may be used for preparing a layered lithium-ion active material containing a nickel element.

In some implementations, the lithium-nickel-containing composite oxide is a lithium-nickel-cobalt-manganese-containing composite oxide. In this case, the metal source may include a nickel source, a cobalt source, and a manganese source. A suitable amount ratio of the nickel source to the cobalt source to the manganese source may be selected according to a molar ratio of Ni:Co:Mn in the target chemical formula.

Usually, the metal source is used for providing a transition metal in the nickel-containing precursor.

Non-restrictively, a soluble salt of a corresponding metal may be used as the metal source. Using a lithium-nickel-containing composite oxide as an example, a soluble nickel salt (for example, nickel sulfate) may be used to provide a nickel source; and using a lithium-nickel-cobalt-manganese-containing composite oxide as an example, a soluble cobalt salt (a non-restrictive example of the soluble cobalt salt is cobalt sulfate) and a soluble manganese salt (a non-restrictive example of the soluble manganese salt is manganese sulfate) may be further used to provide a cobalt source and a manganese source respectively. Using an example of preparing a nickel-containing precursor $LiNi_{0.82}Co_{0.12}Mn_{0.06}O_2$, nickel sulfate, cobalt sulfate, and manganese sulfate in a molar ratio of 82:12:6 may be used as a metal source.

A non-limiting example of the complexing agent may include ammonia water.

In some implementations, a molar ratio of ammonia to the metal element ranges from 1 to 2, and is 1.1, 1.2, 1.3, 1.4, 1.5, 1.6, 1.7, 1.8, 1.9, or 2 as a non-restrictive example, or may be selected from a range consisting of any two of the foregoing values. A slightly excessive amount of ammonia may be used to provide sufficient complexation. The orientation of the primary particle in the secondary particle and the morphology of the secondary particle may be affected by adjusting the amount of ammonia water.

In some implementations, in a co-precipitation reaction system, the concentration of ammonia ranges from 0.3 mol/L to 1 mol/L, and is 0.3 mol/L, 0.4 mol/L, 0.5 mol/L, 0.6 mol/L, 0.7 mol/L, 0.8 mol/L, 0.9 mol/L, or 1 mol/L as a non-restrictive example, or may be selected from a range formed by any two of the foregoing concentrations.

In some implementations, the precipitant is a basic reagent. A non-limiting example of the precipitant may include alkali metal hydroxide. A non-limiting example of the alkali metal hydroxide may include sodium hydroxide.

In some implementations, a reaction temperature at which the co-precipitation reaction is performed may range from 40°C to 60°C, and is, for example, 40°C, 45°C, 50°C, 55°C, or 60°C, or may be selected from a range consisting of any two of the foregoing temperatures.

In some implementations, pH of a reaction system in which the co-precipitation reaction is performed may range from 11.2 to 11.8, and is, for example, 11.2, 11.3, 11.4, 11.5, 11.6, 11.7, or 11.8, or may be selected from a range consisting of any two of the foregoing pH. The orientation of the primary particle in the secondary particle and the morphology of the secondary particle may be affected by adjusting pH of the reaction system.

In some implementations, the co-precipitation reaction may be performed at a reaction temperature ranging from 40°C to 60°C and pH ranging from 11.2 to 11.8. Selection of a temperature condition may affect a growth process of the primary particles, and may also affect an orientation behavior in the growth process of the primary particles.

Non-restrictively, the dispersion condition may be a stirring manner. In some implementations, a stirring rate ranges from 400 rpm to 1000 rpm, and may be further 400 rpm, 500 rpm, 600 rpm, 700 rpm, 800 rpm, 900 rpm, or 1000 rpm, or may be selected from a range consisting of any two of the foregoing stirring rates. The orientation of the primary particle in the secondary particle and the morphology of the secondary particle may also be affected by adjusting the stirring rate.

After step S100, a laser particle size analyzer may be used for testing, to obtain particle sizes and SPAN values of nickel-containing precursor particles, so as to select a nickel-containing precursor having a particle size range and a SPAN value to perform step S200.

S200: The first time of sintering and the second time of sintering were performed to obtain a positive electrode active material including the lithium-nickel-containing composite oxide.

In some implementations, S200 includes the following step: in an oxygen containing atmosphere, a first mixture including the nickel-containing precursor and a lithium source was subject to the first time of sintering at a temperature T1 to obtain a first sintered product, and then a second mixture including the first sintered product was subject to the second time of sintering at a temperature T2 to obtain a positive electrode active material including the lithium-nickel-containing composite oxide, where T1 is higher than T2.

In some implementations, the lithium source is lithium hydroxide.

In some implementations, a molar ratio of the nickel-containing precursor to the lithium source may be 1:(1.03 to 1.07) based on OH, for example, but not limited to, 1:1.03, 1:1.04, 1:1.05, 1:1.06, or 1:1.07. Considering a loss of lithium in a sintering process, generally, there is a slightly excessive amount of lithium.

In some implementations, the step of performing the first time of sintering and the second time of sintering includes: The first time of sintering was first performed at a temperature T1, to obtain a first sintered product, and then the second time of sintering was performed at a temperature T2, where T1 > T2. In this case, the first time of sintering may be referred to as high-temperature sintering, and the second time of sintering may be referred to as low-temperature sintering.

In some implementations, after the first time of sintering ends, crushing, washing, and drying were performed, to obtain a first sintered product.

In some implementations, (T2-T1) ≥ 200°C, optionally, 200°C ≤ (T2-T1) ≤ 600°C, and further optionally, 200°C ≤ (T2-T1) ≤ 400°C. Non-restrictively, (T2-T1) may be any one of the following values or be selected from an interval formed by any two of the following values: 200°C, 250°C, 300°C, 350°C, 400°C, 450°C, and 500°C.

In some implementations, a sintering time t1 for performing the first time of sintering is greater than a sintering time t2 for performing the second time of sintering, namely, t1 > t2.

In some implementations, T1 may range from 700°C to 800°C, and is, for example, 700°C, 720°C, 740°C, 750°C, 760°C, 780°C, or 800°C, or may be selected from a range consisting of any two of the foregoing temperatures. Further, a sintering time for performing the first time of sintering may range from 15h to 30h, and is, for example, 15h, 16 h, 18 h, 20 h, 22 h, 24 h, 25 h, 26 h, 28 h, or 30 h, or may be selected from a range consisting of any two of the foregoing time lengths.

In some implementations, T2 may range from 200°C to 500°C, and is, for example, 200°C, 250°C, 300°C, 350°C, 400°C, 450°C, or 500°C, or may be selected from a range consisting of any two of the foregoing temperatures. Further, a sintering time for performing the second time of sintering may range from 3h to 8h, and is, for example, 3 h, 4 h, 5 h, 6 h, 7 h, or 8 h, or may be selected from a range consisting of any two of the foregoing time lengths.

Non-restrictively, when the first time of sintering is performed, a dopant may be introduced, and the first mixture including the nickel-containing precursor, the lithium source, and the dopant is subject to the first time of sintering, to implement the doping modification. The doping element is introduced to the positive electrode active material. Alternatively, no dopant may be introduced. Reference may be made to an example in the context for a type of the doping element.

Non-restrictively, when the second time of sintering is performed, a coating agent may be introduced, and the second mixture including the first sintered product and the coating agent is subject to the second time of sintering, to implement the coating modification, and form the positive electrode active material having a coating layer. The coating layer includes the coating element provided by the coating agent. Alternatively, no coating agent may be introduced. Reference may be made to an example in the context for a type of the coating element.

Non-restrictively, based on the nickel-containing precursor, both the doping modification and the coating modification may be performed.

The element structures and the element compositions of the precursor and the positive electrode active material may be determined by using a method for analyzing the structure and the element composition of the positive electrode active material well known in the art. For example, a structure of the particle may be analyzed, for example, whether there is a coating layer is analyzed by using a method such as ion polishing cross-sectional morphology analysis combined with scanning electron microscopy (SEM). As a non-restrictive example, an electrode plate sample may be polished by using an IB-19500CP ion cross section polisher, to obtain a polished sample having a segmented surface; and further, a ZEISS sigma 300 device may be used to test the sample. For another example, an inductively coupled plasma spectrometer (ICP spectrometer, for example, a model such as iCAP 7400) may be used to analyze types of elements and a ratio, to determine the chemical formulas of the precursor and the positive electrode active material.

The size and distribution of the particles in the positive electrode active material and the size and orientation of the primary particles in the secondary particle are comprehensively affected by the precursor preparation process and the sintering process. The foregoing describes only some of the affecting relationships. For example, the selection of the sintering temperature may further affect an accumulating manner of the primary particles, and further affect orientation distribution of the primary particles.

The positive electrode active material including the oriented secondary particle may be obtained by using the foregoing method. Using an example in which the positive electrode active material including the lithium-nickel-containing composite oxide is prepared, the growth, accumulation, and orientation behaviors of the primary particles may be adjusted by adjusting one or more of parameters such as the selection of the transition metal element in the metal source, the co-precipitation reaction temperature, the pH value of the co-precipitation reaction, the amount of the complexing agent (for example, ammonia water), the amount of the precipitant (for example, sodium hydroxide), the dispersion speed (the dispersion manner is, for example, stirring), the particle size and distribution of the precursor (such as $D_v50$ and the SPAN value of the precursor), the sintering manner (such as a temperature gradient design manner), the sintering temperature, and the sintering time. Further, the size and the morphology of the formed secondary particle and the size, the orientation, and the orientation distribution of the primary particles in the secondary particle are affected. The angle $\alpha 1$ (the angle formed by the a-axis of the primary particle and the longitudinal direction) and F1 (the quantity proportion of the primary particles whose a-axes form the angles $\alpha 1$ with the longitudinal directions to the oriented secondary particle) may be adjusted to fall within the foregoing ranges. Reference may be made to the following examples. In addition, a manner of deviation of the angle $\alpha 1$ from a corresponding longitudinal direction (for example, may be a clockwise deviation or an anticlockwise deviation), an anisotropy index $I_{\alpha 1}$ of the angle $\alpha 1$, and the like may also be adjusted by adjusting one or more of the foregoing parameters. One or more of the foregoing parameters may be further adjusted to adjust the $R_{L/W}$ of the primary particles and distribution parameters thereof (for example, feature parameters such as an average value of $R_{L/W}$ of an inner layer ($R_{MI}$) and an average value of $R_{L/W}$ of an outer layer ($R_{MO}$)). $R_{MI} < R_{MO}$ may be achieved in a manner such as adjusting a pH value and adding a crystal seed, including achieving a sequential increase in values of $R_{L/W}$ of the primary particles from the center of the oriented secondary particle to the surface of the oriented secondary particle.

Still another second aspect of the present application provides a positive electrode plate, including a positive electrode active material layer. The positive electrode active material layer includes the positive electrode active material according to the second aspect of the present application.

A third aspect of the present application provides a power consuming apparatus, including at least one of the secondary battery described in the first aspect of the present application and the positive electrode active material described in the second aspect of the present application.

In some implementations, the present application further provides a power consuming apparatus. The power consuming apparatus includes the secondary battery according to any implementation provided in the present application. The secondary battery may be used as a power supply of the power consuming apparatus, or may be used as an energy storage unit of the power consuming apparatus. The power consuming apparatus may include, but is not limited to, a mobile device, an electric vehicle, an electric train, a ship, a satellite, and an energy storage system. The mobile device may be, for example, a mobile phone, and a laptop; and the electric vehicle may be, for example, without limitation, an all-electric vehicle, a hybrid electric vehicle, a plug-in hybrid electric vehicle, an electric bicycle, an electric scooter, an electric golf cart, an electric truck, an electric motorcycle, and an electric tool. The power consuming apparatus may be further applied to fields such as military equipment and aerospace, and may be further applied to energy storage power systems such as hydroelectric power plants, thermal power plants, wind power plants, and solar power plants.

For the power consuming apparatus, the secondary battery can be selected according to the requirements during use.

FIG. 8 shows an example of a power consuming apparatus 6. The power consuming apparatus is an all-electric vehicle, a hybrid electric vehicle, a plug-in hybrid electric vehicle, or the like. To satisfy the need of the power consuming apparatus for a high power and high energy density of secondary batteries, a battery pack or a battery module can be used.

The apparatus as another example may be a mobile phone, a tablet computer, a laptop, and the like. The apparatus is generally required to be light and thin, and may use a secondary battery as a power source.

Some examples of the present application will be described hereinafter. The described examples are merely some rather than all of the examples of the present application. The examples described below are illustrative, are merely used to explain the present application, and should not be construed as a limitation to the present application and application thereof. All other examples obtained by those of ordinary skill in the art based on the examples of the present application without involving any creative effort shall fall within the scope of protection of the present application.

Where techniques or conditions are not indicated in the examples, the techniques or conditions described above or in the literatures in the art or described in the product specifications are followed. The reagents or instruments for which no manufacturers are noted are all commercially available common products, or can be conventionally synthesized with commercially available products.

In the following examples, a measurement parameter related to a raw material component may have a slight

deviation within a weighting precision range unless otherwise specified. A temperature parameter and a time parameter are involved, and an acceptable deviation caused by test precision or operation precision of an instrument is allowed.

In the following examples, the room temperature refers to 20°C to 30°C.

An instrument involved in the following test and analysis method is a non-restrictive example, and a person skilled in the art may also perform test and analysis by using a device of another model or a similar method.

**Test and analysis method**

1. Structural and element analysis

    an inductively coupled plasma spectrometer (ICP spectrometer) is used for analysis, to determine a chemical formula.
    Test instrument: iCAP 7400.

2. $D_v50$, $D_v90$, $D_v10$, and $D_n10$ tests and SPAN analysis.

Test instrument: Laser particle size analyzer Mastersizer 3000.

Method: A clean beaker is taken, an appropriate amount of to-be-tested sample is weighed, 20ml of ethanol is added to disperse the sample (the concentration of the sample keeps a light shielding degree: 25% to 30%), and the sample is fully dispersed with an ultrasound of 250W/3min. The sample is poured into a sampling tower and then circulates with a solution to an optical path test system. When a particle is irradiated by a laser beam, a particle size distribution feature of the particle may be obtained by receiving and measuring energy distribution of scattered light. Reference is made to the GB/T19077-2016/ISO 13320:2009 standard.

A particle size volume distribution diagram is drawn according to test data, and $D_v50$, $D_v90$, and $D_v10$ are obtained from the particle size volume distribution diagram. SPAN=($D_v90$-$D_v10$)/$D_v50$. A particle size quantity distribution diagram is drawn according to test data, and $D_n10$ is obtained from the particle size quantity distribution diagram.

For some test results, reference may be made to Table 3.

3. Structure observation and observation and statistical analysis of primary particles in a secondary particle.

The secondary particle in the positive electrode active material layer of the positive electrode plate is cut by using a focused ion beam electron microscope or an ion cross section polisher, to obtain a view of a cross section that basically passes through the center of the secondary particle, and the information about the primary particles in the view of the cross section is further analyzed with reference to a test image of a scanning electron microscope (SEM).

(1) Focused ion beam electron microscope (FEI Scios 2HiVac device) or ion cross section polisher.
The secondary particle is cut. When the cross section that basically passes through the center of the secondary particle is exposed, SEM observation is performed.
(2) Scanning Electron Microscope (SEM)

Equipment: Apreo 2 SEM field emission scanning electron microscope or ZEISS Sigma 300 scanning electron microscope.

Sample preparation method: A sample (for example, 5mm × 5mm) of a suitable size is cut and pasted on a sample stage on which a conductive adhesive is attached.

Test parameters using Apreo 2 SEM as an example: acceleration voltage (HV) 2.00kV, detector T1, OptiPlan mode, and probe current of 50pA. The working distance, the magnification, and the horizontal field width may be selected according to the particle size. A view of the cross section of the oriented secondary particle shown in FIG. 2 is tested as an example. In a test for obtaining FIG. 2, the working distance (WD) is about 4.16mm, the magnification (Mag) is 6500X, and the horizontal field width (HFW) is 19.5 μm.

(3) Analysis of information about the primary particles in the secondary particle.

Referring to the schematic diagram of FIG. 1, parameters such as $\alpha1$ of the primary particle, a direction in which $\alpha1$ deviates from a radial direction of the secondary particle, L, and W are measured, and parameters such as F1, $R_{L/W}$, $R_{MI}$, $R_{MO}$, and $I_{\alpha1}$ are obtained through statistical analysis. For some analysis results, reference may be made to Table 2 and Table 3.

A view of a cross section in which a complete peripheral contour of the cross-section of the secondary particle is displayed is selected from a SEM test result of the view of the cross section passing through the center of the secondary particle, to collect statistics on information about the primary particle.

A particular number N0 of primary particles ($N0 \geq 12$) are selected, a peripheral contour of a cross section of the

primary particle in the view of the cross section is drawn out in an elliptic manner, and a value of a maximum length is measured and used as a test value of the "diameter of the primary particle". A direction of the maximum length is denoted as a direction of an a-axis, a straight line line1 passing through the center of the secondary particle and the center of the primary particle is determined, and a measurement value of an angle between the a-axis and the straight line line1 is denoted as $\alpha 1$; a distance between two intersection points of the straight line line1 and the peripheral contour of the primary particle is denoted as L; and a straight line line2 perpendicular to line1 is determined, and a distance between two intersection points of the straight line line2 and the peripheral contour of the primary particle is denoted as W. Then, $R_{L/W}$=L/W. Reference may be made to FIG. 1.

A distance R from the center of the secondary particle to the surface of the secondary particle is used as a reference, and a region from the center (that is, 0R) of the secondary particle to 2/3R is denoted as an "inner layer"; and a region from 2/3R to the peripheral contour of the secondary particle (that is, 1R) is denoted as an "outer layer". Based on the cross-sectional profile of the oriented secondary particle, the intersection point between the longest axis and the shortest axis in the cross section of the oriented secondary particle is used as the center of the oriented secondary particle.

In terms of a center of a primary particle, when the center of the primary particle falls into the inner layer region, the primary particle statistically falls into the inner layer; when the center of the primary particle falls into the outer layer region, the primary particle statistically falls into the outer layer; and when the center of the primary particle is at the boundary of the inner layer and the outer layer, the primary particle statistically falls into the "inner layer".

According to statistical information of $R_{L/W}$ of the primary particles in the inner layer and the outer layer, an average value of $R_{L/W}$ of the inner layer ($R_{MI}$) and an average value of $R_{L/W}$ of the outer layer ($R_{MO}$) may be calculated.

The number of angles with $15° \leq \alpha 1 \leq 45°$ is counted and denoted as N1, and then F1=N1/N0×100%. F1 is a quantity proportion of primary particles whose a-axes form angles $15° \leq \alpha 1 \leq 45°$ with the corresponding longitudinal directions in the oriented secondary particle.

In a direction in which $\alpha 1$ deviates from a radial direction of the secondary particle: when $\alpha 1$ deviates from a straight line L along a clockwise direction, the mark is "+", and a counting result is $N_1$; when $\alpha 1$ deviates from a straight line L along an anticlockwise direction, the mark is "-", and a counting result is $N_2$; and when $\alpha 1$ is not in a range of $15° \leq \alpha 1 \leq 45°$, the mark is "other". $I_{\alpha 1}$=N1/N2.

(4) Quantity proportion of the oriented secondary particles in the secondary particles.

determining, according to a randomly selected view of a cross section including at least 10 secondary particles and according to an SEM analysis result of the view of the cross section passing through the center of a secondary particle, whether the secondary particle is an oriented secondary particle. When $15° \leq \alpha 1 \leq 45°$, and $F1 \geq 60\%$, the secondary particle is counted as an oriented secondary particle; or when $\alpha 1$ does not fall within the foregoing range or F1 < 60%, the secondary particle is not counted as an oriented secondary particle. The percentage of the number of oriented secondary particles is calculated according to a counting result, and the value is used as a test value of the "percentage P2 of the number of oriented secondary particles in the number of secondary particles".

For some results, reference may be made to Table 3.

4. Representation of a positive electrode active material

(1) Powder compaction density

Powder compaction density may be performed by using a common method in the art.

Test instrument: electronic pressure tester or compaction density meter.

In a test method using an electronic pressure tester as an example: A certain mass $m_0$ of powder is placed in a die of an electronic pressure tester, an area of the bottom of the die is denoted as $A_0$, the pressure is adjusted to 4T, and after the pressure is held for 30s, a height $h_0$ of an obtained powder block is read. A powder compaction density $\rho$ at 4T is calculated according to a formula $\rho=m_0/(A_0 \times h_0)$.

In a test method using a compaction density meter as an example: A certain mass $m_0$ of powder is placed in a special compaction die, an area of the bottom of the die is denoted as $A_0$, then the die is placed in a compaction density meter, a pressure 4 T is applied, and the pressure is held for 30s. A thickness $h_0$ of the de-pressurized powder block is recorded. A powder compaction density $\rho$ at 4T is calculated according to a formula $\rho=m_0/(A_0 \times h_0)$.

For some results, reference may be made to Table 3.

(2) Test of lithium-ion solid-phase diffusion coefficient:

Using the GITT method as an example, steps of testing a lithium-ion solid-phase diffusion coefficient of the positive electrode active material are as follows:

At a testing temperature 25°C, a positive electrode active material is ground into a powder micro-electrode; and the powder micro-electrode is connected to an electro-chemical workstation to perform a coulometric titration. An impulse

current is 20 μA, a titration time is 1 h, and an interval is 4 h (note: to compare impact of the impulse current with that of the time, a parallel experiment at 10 μA for 10 min may be performed), to obtain a GITT curve. The lithium-ion diffusion coefficient D is calculated by using the following formula:

$$D = \frac{4}{\pi}\left(\frac{V_m}{A\times F\times n}\right)^2 \left[I_0\left(\frac{dE}{dx}\right) / \left(\frac{dE}{d\sqrt{t}}\right)\right]^2 \quad (t \ll L^2/D)$$

where D is the lithium-ion diffusion coefficient; $I_0$ is the applied impulse current 20 μA; $V_m$ is the molar volume of the positive electrode active material; F is the Faraday constant; A is the surface area of the electrode, n is a charge quantity of the lithium-ion, and n is 1; dE/dx is a slope of a coulometric titration curve, that is, a slope of an open circuit potential versus a specific concentration on a concentration curve of Li in the electrode; and dE/d(t1/2) is a slope of a polarization voltage versus a curve of t1/2. For more details, reference may be made to the literatures: Xie et al., Solid State Ionics, 2007, 178:1218-1224; and Yang et al., Electrochimica Acta, 2012, 66:88-93.

For some results, reference may be made to Table 3.

5. Test of performance of a battery

(1) Volumetric energy density

A cell volume of the secondary battery is denoted as $V_0$.

Capacity test: The battery was charged to 3.65V at a constant current according to a rate of 1/3C, then charged to a current of 0.05C at a constant voltage of 3.65V, stood for 5min, and discharged to 2.5V according to a rate of 1/3C, to obtain a capacity $C_0$, where a voltage platform was denoted as U.

The volumetric energy density of the battery is $VED=C_0\times U/V_0$.

For some results, reference may be made to Table 3.

(2) Test for cycle performance

At 25°C, the to-be-tested battery was charged to a voltage of 4.25V at a constant current according to a rate of 1C, then charged to a current of 0.05C at a constant voltage of 4.25V, stood for 5min, and discharged to a voltage of 2.8V at a constant current according to a rate of 1C. The obtained capacity was denoted as an initial capacity $C_0$. The above steps were repeatedly performed for the same battery. The discharge capacity of the battery after the nth cycle was denoted as $C_n$. The battery capacity retention rate after the nth cycle was $P_n=C_n/C_0\times 100\%$. The cycle was performed until a cell capacity retention rate decayed to 80%.

Reference may be made to Table 3 for the recorded battery capacity retention rate after 900 cycles.

**Example 1**

1. Preparation of a positive electrode active material

A nickel-containing precursor was prepared: According to a target chemical formula ($LiNi_{0.82}Co_{0.12}Mn_{0.06}O_2$), a metal solution having a Ni:Co:Mn molar ratio of 82:12:6 is prepared by solving nickel sulfate hexahydrate, cobalt sulfate heptahydrate, and manganese sulfate monohydrate into de-ionized water, and the metal solution, a complexing agent ammonia water, and a precipitant sodium hydroxide solution are transferred to a reaction kettle through a pump, to perform a co-precipitation reaction. The entire reaction process is protected by using an inert gas (nitrogen gas), the temperature of the reaction system ranges from 40°C to 60°C, pH ranges from 11.2 to 11.8, the molar ratio of the ammonia to the metal element ranges from 1 to 2, and the stirring rate ranges from 400 rpm to 1000 rpm. After the reaction is completed, working procedures such as washing and drying are performed to obtain a precursor, which is a metal hydroxide.

The nickel-containing precursor is sintered to prepare the positive electrode active material of the lithium-nickel-containing composite oxide: The obtained nickel-containing precursor and the lithium source lithium hydroxide are mixed uniformly, the first time of sintering is performed under a high-temperature condition by feeding oxygen gas ($O_2$), where the high-temperature sintering temperature ranges from 700°C to 800°C (T1), the sintering time ranges from 15h to 30h (t1), and after the prepared material is subject to working procedures such as crushing, washing, and drying, a first sintered product is obtained. The second time of low-temperature sintering is performed on the first sintered product, where the low-temperature sintering temperature ranges from 200°C to 500°C (T2), and the sintering time ranges from 3h to 8h (t2), to obtain a ternary positive electrode active material.

In this example, the reaction temperature of the co-precipitation method is 50°C, pH is controlled to 11.5 ± 0.2, the

molar ratio of ammonia to the metal element is 1.2, the stirring rate is 600 rpm, the nickel-containing precursor and the lithium source lithium hydroxide are mixed according to a molar ratio 1:1.05 (based on OH), the high-temperature sintering temperature (T1) is 780°C, the high-temperature sintering time (t1) is 20h, the low-temperature sintering temperature (T2) is 400°C, and the high-temperature sintering time (t2) is 4h.

2. Preparation of secondary battery

(1) Preparation of positive electrode plate

The foregoing prepared positive electrode active material, conductive carbon black, polyvinylidene difluoride PVDF are mixed according to a mass ratio of 97.44:1.56:1 and then added to a solvent N-methylpyrrolidone to obtain a positive electrode slurry. The positive electrode slurry is applied to two surfaces of an aluminum foil, and is dried in a vacuum oven at 100°C to 120°C for 8 h to 10 h, followed by cold pressing and cutting, to obtain a positive electrode plate. A single-side coating areal density is 0.25 g/(1540.25 $mm^2$), which is approximately 16.23 $mg/cm^2$.

(2) Preparation of negative electrode plate

Graphite, styrene butadiene rubber, conductive carbon, and sodium carboxymethyl cellulose are added to deionized water at a mass ratio of 96.5:1.8:0.7:1, and mixed uniformly, to obtain a negative electrode slurry. The negative electrode slurry was applied to two surfaces of a copper foil, and dried in a drying oven, followed by cold pressing and cutting, to obtain a negative electrode plate. A single-side coating areal density is 0.16 g/(1540.25 $mm^2$), which is approximately 10.39 $mg/cm^2$.

(3) Separator

A conventional polypropylene film (PP film) is selected.

(4) Electrolyte solution

Ethylene carbonate, diethyl carbonate, and dimethyl carbonate were mixed at a volume ratio of 1:1:1, and $LiPF_6$ was dissolved in the foregoing mixed solvent, to obtain an electrolyte solution. In the electrolyte solution, a concentration of $LiPF_6$ was 1 mol/L.

(5) Assembly of secondary battery

Placement is performed according to the sequence of "separator-negative electrode plate-separator-positive electrode plate", one end of each of the positive electrode plate, the negative electrode plate, and the two separators is fixed to a discharge roller, and the other ends are laminated together and then are fixed to a winding shaft. The winding shaft is rotated by using a motor, and the positive electrode plate, the negative electrode plate, and the two separators are wound, to obtain a wound cell (a wound electrode assembly).

The electrode assembly is loaded into an aluminum case, is baked at 80°C to remove water, is then injected with an electrolyte solution and sealed, and is subject to standing, hot and cold pressing, chemical formation, shaping, capacity test, and other working procedures in sequence to obtain the secondary battery.

**Examples 2 to 5:** The positive electrode active material and the secondary battery are prepared by using a method basically the same as that in Example 1. The difference lies in that the step of preparing the positive electrode active material is adjusted to mainly adjust one or more of the following parameters: pH of a co-precipitation reaction system, a concentration of a complexing agent ammonia water (to control pH to be in a range of 11.2 to 11.8, the amount of sodium hydroxide may be correspondingly adjusted), a reaction temperature and a reaction time of the co-precipitation reaction, and a stirring rate in the step of preparing the precursor, and a sintering temperature T1, a sintering time t1, a sintering temperature T2, and a sintering time t2 in the step of sintering the precursor. For parameters mainly adjusted, reference may be made to Table 1. Parameters not involved in Table 1 may be properly adjusted according to the foregoing descriptions.

**Example 6:** The positive electrode active material and the secondary battery are prepared by using a method basically the same as that in Example 1. The difference lies in that, when a nickel-containing precursor is prepared in the step of preparing the positive electrode active material, a molar ratio of the nickel source to the cobalt source to the manganese source is adjusted to 6:2:2 according to $LiNi_{0.6}Co_{0.2}Mn_{0.2}O_2$.

**Comparative Example 1:**

The positive electrode active material and the secondary battery are prepared by using a method basically the same as that in Example 1. The difference lies in that, the step of preparing the positive electrode active material differs, where pH is 11.0 ± 0. 2, the molar ratio of ammonia to the metal element is 1.0, and the stirring rate is 500 rpm in the step of preparing the precursor, and the sintering temperature T1 is 750°C in the step of sintering the precursor.
A positive electrode active material with relatively low F1 is obtained in this comparative example. F1 is a quantity proportion of primary particles whose a-axes form angles 15° ≤ α1 ≤ 45° with the corresponding longitudinal directions in the oriented secondary particle.

**Comparative Example 2:**

The positive electrode active material and the secondary battery are prepared by using a method basically the same as that in Example 1. The difference lies in that, the step of preparing the positive electrode active material differs, where the co-precipitation reaction temperature is 55°C, pH is 11.2 ± 0. 2, the molar ratio of ammonia to the metal element is 1.1, and the stirring rate is 450 rpm in the step of preparing the precursor; and the second time of sintering is first performed, and then the first time of sintering is performed.
The positive electrode active material of the lithium-nickel-containing composite oxide is prepared: The nickel-containing precursor is sintered at 450°C for 8h, is subject to working procedures such as crushing, washing, and drying, then is mixed uniformly with a lithium source lithium hydroxide, and is sintered at 720°C for 18h.
In this comparative example, a positive electrode active material whose most primary particles in secondary particles have relatively small α1 is obtained, and according to a statistical result that α1 is less than 10°, that is, it may be basically considered that there is no oriented secondary particle.
For parameters of preparing the positive electrode active materials in the examples 2 to 6 and the comparative examples 1 to 2, reference may also be made to Table 1.

Table 1

| No. | Parameter of preparing a positive electrode active material | | | | | |
|---|---|---|---|---|---|---|
| | Preparation of precursor | | | | Sinter | |
| | Co-precipitation reaction temperature (°C) | pH | Molar ratio of ammonia to metal element | Stirring rate (rpm) | First time of sintering | Second time of sintering |
| Example 1 | 50 | 11.5±0.2 | 1.2 | 600 | 780°C, 20h | 400°C, 4h |
| Example 2 | 50 | 11.6±0.2 | 1.5 | 500 | 800°C, 15h | 450°C, 3h |
| Example 3 | 55 | 11.5±0.2 | 1.25 | 800 | 760°C, 22h | 350°C, 6h |
| Example 4 | 40 | 11.5±0.2 | 1.6 | 400 | 740°C, 24h | 300°C, 6h |
| Example 5 | 60 | 11.2±0.2 | 1.1 | 1000 | 700°C, 30h | 250°C, 8h |
| Example 6 | Same as Example 1 | | | | | |
| Comparative Example 1 | 50 | 11.0±0.2 | 1.0 | 500 | 750°C, 20h | 400°C, 4h |
| Comparative Example 2 | 55 | 11.2±0.2 | 1.1 | 450 | 450°C, 8h | 720°C, 18h |

**Test analysis result:**

In Example 1 to Example 6, a positive electrode active material is prepared by using a lithium-nickel-containing oxide as an example, and according to an element analysis result, an element composition of the positive electrode active material is basically the same as that of a target chemical formula.
The positive electrode active materials prepared in the foregoing examples 1 to 6 all satisfy the following features:

(1) Oriented secondary particles having 15° ≤ α1 ≤ 45° and F1 ≥ 60% exist, where oriented secondary particles satisfy F1 ≥ 70% in some examples, and F1 exceeds 80% in some examples;
(2) a quantity proportion P2 of oriented secondary particles in the secondary particles of the positive electrode active

material ≥ 75% (both P2 ≥ 70% and P2 ≥ 60%), P2 ≥ 80% and further P2 ≥ 90% in most of the examples, and P2 exceeds 95% in some examples;

(3) according to the statistical result, $R_{L/W}$ of each oriented secondary particle satisfies $R_{L/W} \leq 4$ and in a range of $0.95 \leq R_{L/W} \leq 4$, an average value of $R_{L/W}$ is in a range of 1.5 to 2.5, and an average value of $R_{L/W}$ is in a range of 1.5 to 2.0 in some examples;

(4) according to the statistical result, $R_{MI} < R_{MO}$ is satisfied, that is, an average value of $R_{L/W}$ of the inner layer is lower than an average value of $R_{L/W}$ of the outer layer; each example satisfies $R_{MI} < 1.8$ and $R_{MO} \geq 1.8$, and most of the examples satisfy $1.3 \leq R_{MI} < 1.8$ and $1.8 \leq R_{MO} \leq 2.3$; each example satisfies: $R_{L/W}$ of the outer layer is in a range of 1.2 to 4 and $R_{L/W}$ of the inner layer is in a range of $0.95 \leq R_{L/W} \leq 2.8$; and most of the examples satisfy: $R_{L/W}$ of at least 80% of the primary particles in the outer layer is in a range of 1.4 to 4 and $R_{L/W}$ of at least 80% of the primary particles in the inner layer is in a range of 0.95 to 2.0;

(5) according to the statistical result, an anisotropy index of the angle $\alpha 1$ satisfies $0.4 \leq I_{\alpha 1} \leq 2.5$, and most of the examples satisfy: $0.5 \leq I_{\alpha 1} \leq 2.0$;

(6) $D_v50$ of the positive electrode active material ranges from 8 μm to 11 μm, diameters of at least 80% of the primary particles in the oriented secondary particle are in a range of 100 nm to 1600 nm, and the positive electrode active material satisfies $1.1 \leq SPAN \leq 1.4$; and some examples satisfy: $D_v50$ of the positive electrode active material ranges from 9 μm to 11 μm, diameters of at least 80% of the primary particles in the oriented secondary particle are in a range of 400 nm to 1500 nm, and $1.2 \leq SPAN \leq 1.3$ for the positive electrode active material; and

(7) according to the statistical result, the positive electrode active material satisfies 15 μm ≤ $D_v90$ ≤ 18 μm, 4 μm ≤ $D_v10$ ≤ 6 μm, and $D_n10$ ≥ 2 μm; and some examples further satisfy 16 μm ≤ $D_v90$ ≤ 17 μm, and 4.5 μm ≤ $D_v10$ ≤ 5.5 μm.

Using Example 1 as an example, according to FIG. 2, statistical results of values L, values W, and directions in which $\alpha 1$ deviates from corresponding longitudinal directions of primary particles at the inner layer and the outer layer in one of the oriented secondary particles are shown in Table 2. The following information may be obtained: $R_{L/W}$ falls within a range of 0.95 to 4, an average value of $R_{L/W}$ is 1.86, $R_{MI}$ is 1.51 μm, and $R_{MO}$ is 2.05 μm, satisfying $R_{MI} < R_{MO}$; the quantity proportion of primary particles in the outer layer whose $R_{L/W}$ is in a range of 1.4 to 4 is about 81%, and the quantity proportion of primary particles in the inner layer whose $R_{L/W}$ is in a range of 0.95 to 2.0 is about 83%; and

an average value of L of the inner layer is less than 700 nm, an average value of L of the outer layer is 783.5 nm (greater than or equal to 720 nm, and further greater than or equal to 750 nm), an average value of L of the inner layer is 649.4 nm (less than or equal to 700 nm, and further less than or equal to 660 nm), and $I_{\alpha 1}$ is approximately 1.75.

Table 2

| Serial numbers of primary particles | Direction in which $\alpha 1$ deviates from a corresponding longitudinal direction | L | W | Distribution positions of primary particles in a secondary particle | Statistical value $R_{L/W}$ |
|---|---|---|---|---|---|
| 1 | Other | 628.5nm | 506.4nm | Inside | 1.24 |
| 2 | + | 871.4nm | 548.7nm | Inside | 1.59 |
| 3 | Other | 535.6nm | 543.9nm | Inside | 0.98 |
| 4 | Other | 557.5nm | 410.6nm | Inside | 1.36 |
| 5 | + | 500 nm | 318.0 nm | Inside | 1.57 |
| 6 | Other | 803.4nm | 346.0 nm | Inside | 2.32 |
| 7 | + | 1.323 μm | 360.2nm | Outside | 3.67 |
| 8 | - | 963.8nm | 314.2nm | Outside | 3.07 |
| 9 | + | 459.3nm | 353.4nm | Outside | 1.30 |
| 10 | Other | 585.3nm | 436.7nm | Outside | 1.34 |
| 11 | - | 604.3nm | 392.9nm | Outside | 1.54 |
| 12 | + | 792.0 nm | 508.3nm | Outside | 1.56 |
| 13 | - | 656.5nm | 280.1nm | Outside | 2.34 |
| 14 | + | 639.7nm | 422.8nm | Outside | 1.51 |
| 15 | Other | 479.5nm | 282.4nm | Outside | 1.70 |

(continued)

| Serial numbers of primary particles | Direction in which $\alpha1$ deviates from a corresponding longitudinal direction | L | W | Distribution positions of primary particles in a secondary particle | Statistical value $R_{L/W}$ |
|---|---|---|---|---|---|
| 16 | - | 1.21 μm | 405.9nm | Outside | 2.98 |
| 17 | + | 905.4nm | 593.9nm | Outside | 1.52 |

In Table 2: in a "column of directions in which $\alpha1$ deviates from corresponding longitudinal directions", "+" corresponds to a clockwise direction, "-" corresponds to an anticlockwise direction, and "other" indicates that an angle is not in a range of 15° to 45°.

The positive electrode active materials prepared in Examples 1 to 6 all have relatively high compaction density. Reference may be made to Table 3.

lithium-ion solid-phase diffusion coefficients (at 25°C) of the positive electrode active materials prepared in Example 1 to Example 6 are all in a range of $1\times10^{-9}$ $cm^2\cdot s^{-1}$ to $8\times10^{-9}$ $cm^2\cdot s^{-1}$, where the lithium-ion solid-phase diffusion coefficient is $2.5\times10^{-9}$ $cm^2\cdot s^{-1}$ in Example 1. In both the comparative example 1 and the comparative example 2, the lithium-ion solid-phase diffusion coefficients are below $1\times10^{-9}$ $cm^2\cdot s^{-1}$, where in comparative example 1, the lithium-ion solid-phase diffusion coefficient is $5.2\times10^{-10}$ $cm^2\cdot s^{-1}$, and in comparative example 2, the lithium-ion solid-phase diffusion coefficient is $1.8\times10^{-10}$ $cm^2\cdot s^{-1}$. Reference may be made to Table 3.

The secondary batteries prepared in Example 1 to Example 6 all have a high energy density, a good dynamics performance, and a long cycle life together.

In the positive electrode active material prepared in comparative example 1, F1 is relatively low; and the positive electrode active material prepared in the comparative example 2 almost has no oriented secondary particles. According to a test result, $\alpha1$ is less than 10°, and it can be learned that the primary particles are mainly distributed along the radial direction of the secondary particle. The dynamics performance, the energy density, and the cycle performance of the secondary battery prepared in each of the comparative example 1 and the comparative example 2 decrease to different extents.

Some test analysis results of some examples are summarized in Table 3.

Table 3

| No. | Positive electrode active material | | | | | | Performance of the battery | |
|---|---|---|---|---|---|---|---|---|
| | Oriented secondary particle | | | Material test | | | Energy density | Cycle performance |
| | Angle $\alpha1$ in the following range exists | F1 satisfies | P2 satisfies | SPAN value | Powder compaction density ($g/cm^3$) at 4T | Lithium-ion solid-phase diffusion coefficient at 25°C ($10^{-9}$ $cm^2\cdot s^{-1}$) | Volumetric energy density (Wh/L) | Battery capacity retention rate after 900 cycles |
| Example 1 | 15° to 45° | 64% | 92% | 1.3 | 3.45 | 2.5 | 693 | 95% |
| Example 2 | 15° to 45° | ≥70% | ≥80% | 1.4 | 3.41 | 1 to 8 | 681 | 96% |
| Example 3 | 15° to 45° | ≥90% | ≥90% | 1.2 | 3.40 | | 685 | 93% |
| Example 4 | 15° to 40° | ≥60% | ≥60% | 1.1 | 3.35 | | 689 | 90% |
| Example 5 | 15° to 45° | ≥65% | ≥75% | 1.4 | 3.42 | | 679 | 93% |
| Comparative Example 1 | 15° to 35° | About 30% | About 42% | 1.3 | 3.35 | 0.52 | 674 | 89% |
| Comparative Example 2 | $\alpha1$ is less than 10° | 0 | / | 1.5 | 3.34 | 0.18 | 671 | 85% |

In Table 3, the powder compaction density at 4T is tested by using an electronic pressure tester.

The above description of the various implementations and examples tends to emphasize the differences between the various implementations and examples. The implementations and examples may be cross-referenced for identical or similar parts, and details are not described herein again for the sake of brevity. The technical features in the foregoing implementations and examples may be randomly combined. For concise description, not all possible combinations of the technical features in the foregoing examples are described. However, provided that combinations of the technical features do not conflict with each other, the combinations of the technical features are considered as falling within the scope described in this specification.

It should be noted that the present application is not limited to the above implementations and examples. The foregoing implementations and examples are merely exemplary, and implementations and examples having substantially the same technical idea and the same effects within the scope of the technical solution of the present application are all included in the technical scope of the present application. The foregoing implementations and examples are only several implementations and examples of the present application, which are described in detail, without limitation to the scope claimed by the present application. In addition, other examples constructed by applying various modifications conceivable to those skilled in the art to the implementations or examples and combining some of the constituent elements of the implementations or examples without departing from the scope of the essence of the present application are also included in the scope of the present application.

## Claims

**1.** A secondary battery, comprising a positive electrode plate, wherein the positive electrode plate comprises a positive electrode active material, the positive electrode active material comprises secondary particles, and the secondary particle is an agglomerate comprising a plurality of primary particles; and the primary particles comprise a positive electrode active substance;

in any one of the secondary particles, a direction from a center of the secondary particle to a surface is denoted as an X direction; an X direction passing through a center of any one of the primary particles is denoted as a longitudinal direction; and in any one of the primary particles, a longest axis of the primary particle is denoted as an a-axis; and

the secondary particles comprise oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, wherein $15° \leq \alpha 1 \leq 45°$, and $F1 \geq 60\%$.

**2.** The secondary battery according to claim 1, wherein the angle $\alpha 1$ is obtained in the following manner: in a cross section passing through a center of the oriented secondary particle, a direction from the center of the oriented secondary particle to a surface of the oriented secondary particle is used as an X direction; an X direction passing through a center of a cross section of a primary particle is used as a longitudinal direction corresponding to the primary particle; a longest axis in the cross section of the primary particle is denoted as an a-axis; and the angle $\alpha 1$ is obtained according to an angle formed between the a-axis and the corresponding longitudinal direction.

**3.** The secondary battery according to claim 1 or 2, wherein $F1 \geq 64\%$.

**4.** The secondary battery according to any one of claims 1 to 3, wherein a quantity proportion of the oriented secondary particles in the secondary particles is denoted as P2, satisfying $P2 \geq 60\%$.

**5.** The secondary battery according to claim 4, wherein $P2 \geq 75\%$.

**6.** The secondary battery according to any one of claims 1 to 5, wherein a length value of the primary particle along the longitudinal direction is denoted as L, a length value of the primary particle along a direction perpendicular to the longitudinal direction is denoted as W, and a ratio of L to W in the primary particle is denoted as $R_{L/W}$; and
in the oriented secondary particle, $R_{L/W}$ of the primary particles is less than or equal to 4.

**7.** The secondary battery according to claim 6, wherein the value L, the value W, and the value $R_{L/W}$ are obtained in the following manner: in a cross section passing through a center of the oriented secondary particle, a direction from the center of the oriented secondary particle to a surface of the oriented secondary particle is used as an X direction; an X direction passing through a center of a cross section of a primary particle is used as a longitudinal direction

corresponding to the primary particle; the value L is obtained according to the length value of the primary particle along the corresponding longitudinal direction, the value W is obtained according to a length value of the primary particle along the direction perpendicular to the corresponding longitudinal direction, and the value $R_{L/W}$ is obtained according to a ratio obtained by dividing the value L by the value W.

**8.** The secondary battery according to claim 6 or 7, wherein the positive electrode active material satisfies at least one of the following features:

in the oriented secondary particle, $R_{L/W}$ of the primary particles satisfies $0 < R_{L/W} \leq 4$; and
in the oriented secondary particle, an average value of $R_{L/W}$ of the primary particles ranges from 1.5 to 2.5.

**9.** The secondary battery according to any one of claims 6 to 8, wherein the positive electrode active material satisfies at least one of the following features:

in the oriented secondary particle, $R_{L/W}$ of the primary particles satisfies $0.95 \leq R_{L/W} \leq 4$; and
in the oriented secondary particle, an average value of $R_{L/W}$ of the primary particles ranges from 1.5 to 2.0.

**10.** The secondary battery according to any one of claims 6 to 9, wherein a distance between the center and the surface of the oriented secondary particle is denoted as R; a part from the center of the oriented secondary particle to a position 2/3R away from the center is denoted as an inner layer, and a part from the position 2/3R away from the center to the surface of the oriented secondary particle is denoted as an outer layer; and
in the oriented secondary particle, an average value of $R_{L/W}$ of the inner layer is denoted as $R_{MI}$, and an average value of $R_{L/W}$ of the outer layer is denoted as $R_{MO}$, wherein $R_{MI} < R_{MO}$.

**11.** The secondary battery according to claim 10, wherein the positive electrode active material satisfies one or more of the following features:

in the oriented secondary particle, $R_{MI} < 1.8$, and $R_{MO} \geq 1.8$; and
in the oriented secondary particle, $R_{L/W}$ of the outer layer satisfies $1.2 \leq R_{L/W} \leq 4$, and $R_{L/W}$ of the inner layer satisfies $0.95 \leq R_{L/W} \leq 2.8$.

**12.** The secondary battery according to claim 10 or 11, wherein the positive electrode active material satisfies one or more of the following features:

in the oriented secondary particle, $1.3 \leq R_{MI} < 1.8$, and $1.8 \leq R_{MO} \leq 2.3$; and
in the oriented secondary particle, $R_{L/W}$ of at least 80% of the primary particles in the outer layer satisfies $1.4 \leq R_{L/W} \leq 4$, and $R_{L/W}$ of at least 80% of the primary particles in the inner layer satisfies $0.95 \leq R_{L/W} \leq 2.0$.

**13.** The secondary battery according to any one of claims 6 to 12, wherein in the oriented secondary particle, values of $R_{L/W}$ of the primary particles sequentially increase from the center of the oriented secondary particle to the surface of the oriented secondary particle.

**14.** The secondary battery according to any one of claims 1 to 13, wherein based on a quantity of primary particles in the oriented secondary particle whose a-axes form an angle $\alpha 1$ with the longitudinal direction, an anisotropy index of the angle $\alpha 1$ is denoted as $I_{\alpha 1}$, and then $0.4 \leq I_{\alpha 1} \leq 2.5$, wherein
in the cross section passing through the center of the oriented secondary particle, angles $\alpha 1$ by which the a-axes deviate from corresponding longitudinal directions clockwise are denoted as positive angles, angles $\alpha 1$ by which the a-axes deviate from corresponding longitudinal directions anticlockwise are denoted as negative angles, and $I_{\alpha 1}$ is a ratio of a quantity of the positive angles to a quantity of the negative angles.

**15.** The secondary battery according to claim 14, wherein $0.5 \leq I_{\alpha 1} \leq 2.0$.

**16.** The secondary battery according to any one of claims 1 to 14, wherein the positive electrode active material satisfies one or more of the following features:

$D_v50$ of the positive electrode active material ranges from 8 $\mu$m to 11 $\mu$m;
diameters of at least 80% of the primary particles in the oriented secondary particle are in a range of 100 nm to 1600 nm, wherein the diameter of the primary particle is a maximum length of lengths of the primary particle in all

directions; and
a particle size distribution parameter SPAN of the positive electrode active material satisfies the following formula: $SPAN=(D_v90-D_v10)/D_v50$, wherein $1.1 \leq SPAN \leq 1.4$.

**17.** The secondary battery according to claim 16, wherein the positive electrode active material satisfies one or more of the following features:

$D_v50$ of the positive electrode active material ranges from 9 μm to 11 μm;
diameters of at least 80% of the primary particles in the oriented secondary particle are in a range of 400 nm to 1500 nm; and
SPAN of the positive electrode active material satisfies: $1.2 \leq SPAN \leq 1.3$.

**18.** The secondary battery according to any one of claims 1 to 17, wherein the positive electrode active material satisfies one or more of the following features:

$D_v90$ of the positive electrode active material satisfies: $15\ \mu m \leq D_v90 \leq 18\ \mu m$;
$D_v10$ of the positive electrode active material satisfies: $4\ \mu m \leq D_v10 \leq 6\ \mu m$;
$D_n10$ of the positive electrode active material satisfies: $D_n10 \geq 2\ \mu m$.

**19.** The secondary battery according to claim 18, wherein the positive electrode active material satisfies one or more of the following features:

$D_v90$ of the positive electrode active material satisfies: $16\ \mu m \leq D_v90 \leq 17\ \mu m$;
$D_v10$ of the positive electrode active material satisfies: $4.5\ \mu m \leq D_v10 \leq 5.5\ \mu m$.

**20.** The secondary battery according to any one of claims 1 to 19, wherein in the oriented secondary particle, the positive electrode active substance comprises a layered lithium-ion active material.

**21.** The secondary battery according to any one of claims 1 to 20, wherein in the oriented secondary particle, the positive electrode active substance comprises a lithium-nickel-containing composite oxide.

**22.** The secondary battery according to claim 21, wherein a molar ratio of a nickel element to an oxygen element in the lithium-nickel-containing composite oxide is denoted as $Q_{Ni/O}$, wherein $0.3 \leq Q_{Ni/O} \leq 0.5$.

**23.** The secondary battery according to claim 21 or 22, wherein the oriented secondary particle satisfies one or more of the following features:

in the oriented secondary particle, $0.4 \leq Q_{Ni/O} \leq 0.5$;
the lithium-nickel-containing composite oxide comprises at least one of a Co element and an M element, wherein the M element is at least one of an Mn element and an Al element;
the lithium-nickel-containing composite oxide comprises a doping element, $Q_{Ni/O} < 0.5$, and the doping element comprises at least one element of Zr, Al, B, Sr, and Ca; and
at least a part of the primary particle comprises a particle body and a coating layer on at least a part of a surface of the particle body, the particle body comprises the lithium-nickel-containing composite oxide, and the coating layer comprises at least one element of Zr, Al, B, Sr, and Ca.

**24.** The secondary battery according to any one of claims 21 to 23, wherein in the oriented secondary particle, the positive electrode active substance comprises one or more of a lithium-nickel-cobalt-manganese oxide, a lithium-nickel-cobalt-aluminum oxide, and a modified form of any one of the foregoing substances, wherein the modified form comprises one or more of doping modification and coating modification, a doping element used for the doping modification comprises at least one element of Zr, Al, B, Sr, and Ca, and a coating element used for the coating modification comprises at least one element of Zr, Al, B, Sr, and Ca; and
a molar ratio $R_{Ni/O}$ of the nickel element to the oxygen element in the positive electrode active substance satisfies $0.4 \leq R_{Ni/O} \leq 0.5$.

**25.** The secondary battery according to claim 24, wherein the positive electrode active material satisfies one or more of the following features:

$D_v50$ of the positive electrode active material ranges from 8 μm to 11 μm;
diameters of at least 80% of the primary particles in the oriented secondary particle are in a range of 100 nm to 1600 nm; and
a particle size distribution parameter SPAN of the positive electrode active material satisfies the following formula: $SPAN=(D_v90-D_v10)/D_v50$, wherein $1.1 \leq SPAN \leq 1.4$.

**26.** The secondary battery according to claim 25, wherein the positive electrode active material satisfies one or more of the following features:

$D_v50$ of the positive electrode active material ranges from 9 μm to 10 μm;
diameters of at least 80% of the primary particles in the oriented secondary particle are in a range of 400 nm to 1500 nm; and
SPAN of the positive electrode active material satisfies: $1.2 \leq SPAN \leq 1.3$.

**27.** The secondary battery according to any one of claims 24 to 26, wherein a distance between the center and the surface of the oriented secondary particle is denoted as R; a part from the center of the oriented secondary particle to a position 2/3R away from the center is denoted as an inner layer, and a part from the position 2/3R away from the center to the surface of the oriented secondary particle is denoted as an outer layer; and

in the oriented secondary particle, an average value of L of the inner layer is less than 700 nm, and an average value of L of the outer layer is greater than or equal to 720 nm, wherein
a length value of the primary particle along the longitudinal direction is denoted as L, and a distance between the center and the surface of the oriented secondary particle is denoted as R; and a part from the center of the oriented secondary particle to a position 2/3R away from the center is denoted as an inner layer, and a part from the position 2/3R away from the center to the surface of the oriented secondary particle is denoted as an outer layer.

**28.** The secondary battery according to claim 27, wherein in the oriented secondary particle, an average value of L of the inner layer is less than or equal to 660 nm, and an average value of L of the outer layer is greater than or equal to 750 nm.

**29.** The secondary battery according to any one of claims 1 to 28, wherein the secondary battery further comprises a negative electrode plate, a separator, and an electrolyte solution, and the separator is located between the positive electrode plate and the negative electrode plate.

**30.** The secondary battery according to any one of claims 1 to 29, wherein the secondary battery is a lithium-ion secondary battery.

**31.** A positive electrode active material, wherein the positive electrode active material comprises secondary particles, and the secondary particle is an agglomerate comprising a plurality of primary particles; and the primary particles comprise a positive electrode active substance;

in any one of the primary particles, a longest axis of the primary particle is denoted as an a-axis; and in any one of the secondary particles, a direction from a center of the secondary particle to a surface is denoted as an X direction; an X direction passing through a center of any one of the primary particles is denoted as a longitudinal direction; and
the secondary particles comprise oriented secondary particles; and in the oriented secondary particle, based on a total quantity of primary particles in the oriented secondary particle, a quantity proportion of primary particles whose a-axes form angles $\alpha 1$ with the longitudinal directions in the oriented secondary particle is denoted as F1, wherein $15° \leq \alpha 1 \leq 45°$, and $F1 \geq 60\%$.

**32.** The positive electrode active material according to claim 31, being the positive electrode active material in the secondary battery according to any one of claims 2 to 28.

**33.** A power consuming apparatus, comprising at least one of the secondary battery according to any one of claims 1 to 30 and the positive electrode active material according to claim 31 or 32.

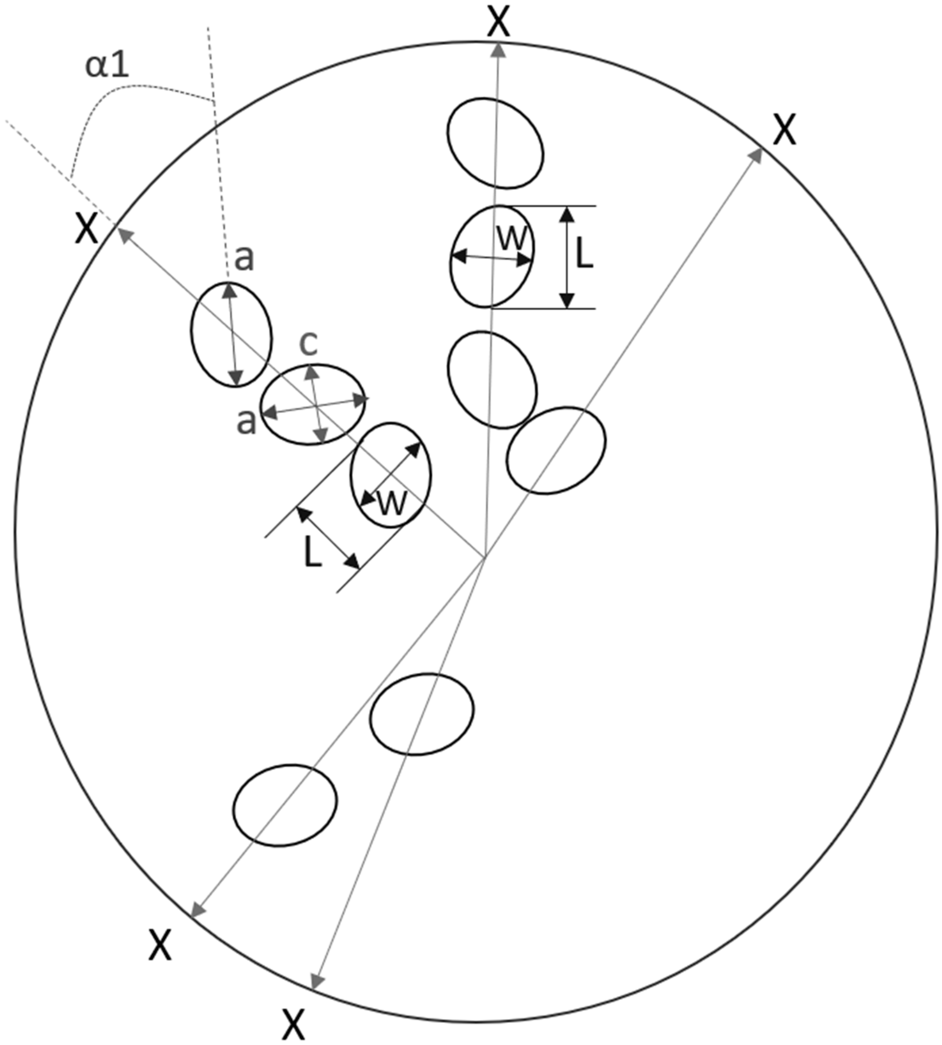


FIG. 1

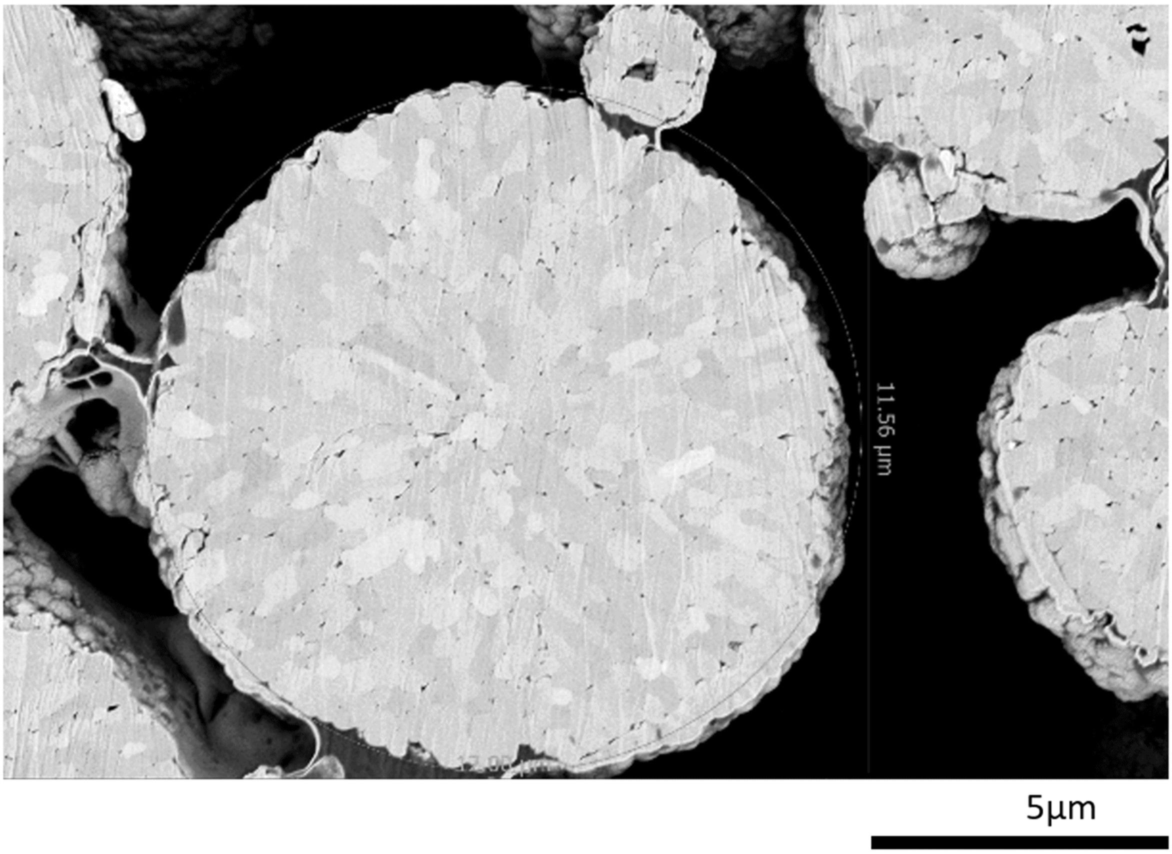


FIG. 2

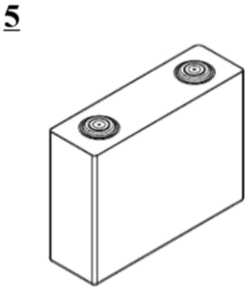


FIG. 3

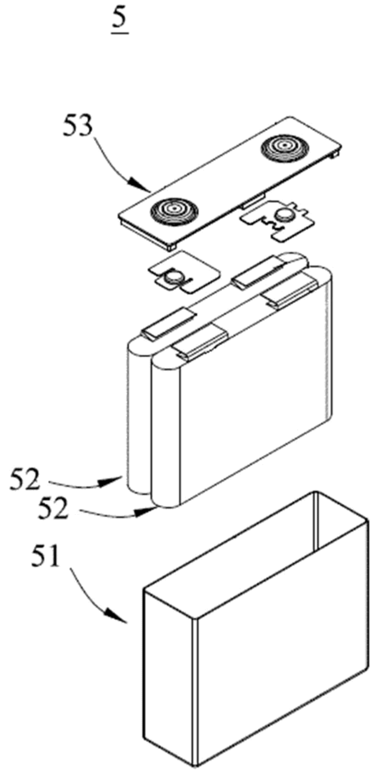


FIG. 4

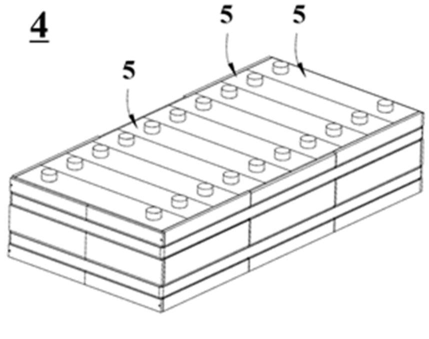


FIG. 5

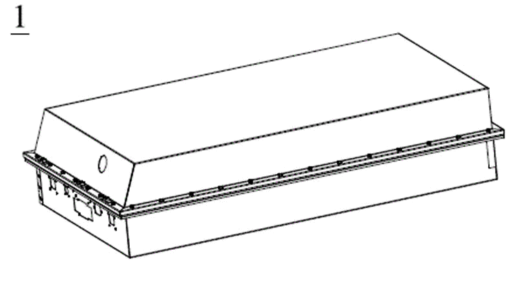


FIG. 6

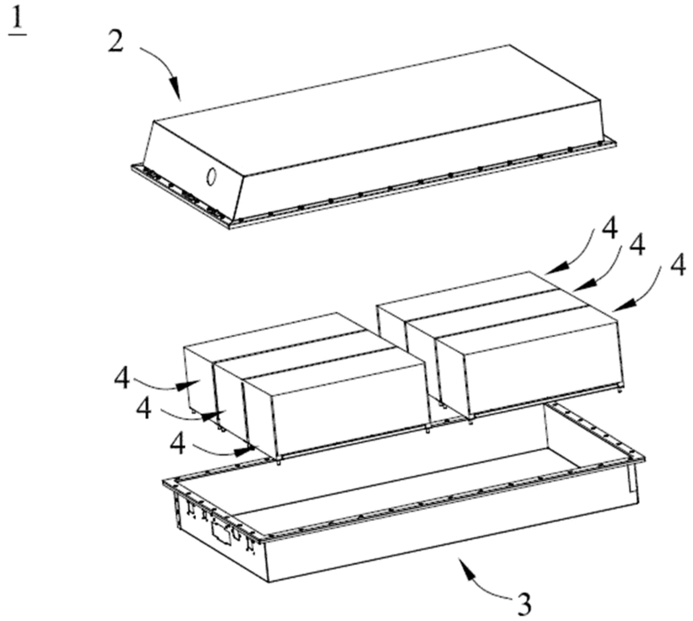


FIG. 7

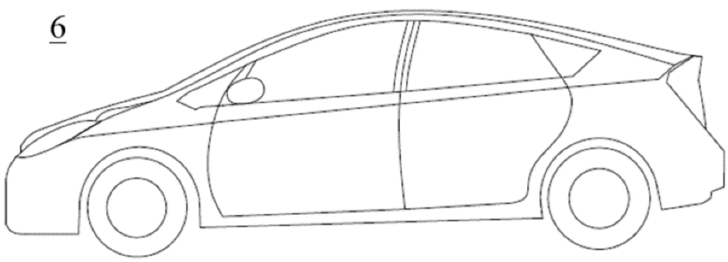


FIG. 8

**INTERNATIONAL SEARCH REPORT**

International application No. **PCT/CN2025/095444**

**A. CLASSIFICATION OF SUBJECT MATTER**

H01M10/0525(2010.01)i; H01M4/525(2010.01)i; H01M4/36(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

DWPI; CNTXT; ENTXTC; VCN; CNKI; ISI Web of Science: 正极活性材料, 正极活性物质, 二次颗粒, 团聚体, 团聚态, 一次颗粒, 单晶, 二次 3w 烧, 锂??电池, 二次电池, 能量密度, 动力学性能, 循环寿命, 锂, 镍, 钴, 锰, Li, Ni, Co, Mn, pH, 酸碱度, positive electrode active material, secondary particle?, agglomerate?, primary particle?, second 3w (heat+ or therm+ or anneal+), secondary battery, energy density, kinetic performance, cycle life, acidity, alkalinity

**C. DOCUMENTS CONSIDERED TO BE RELEVANT**

| Category* | Citation of document, with indication, where appropriate, of the relevant passages | Relevant to claim No. |
|---|---|---|
| X | CN 113363497 A (HUIZHOU EVE ENERGY CO., LTD.) 07 September 2021 (2021-09-07) description, paragraphs 8-10, 17, 27, 29-33, 38-40, 43-44, and 49, and embodiments 1 and 9, and figure 1 | 1-33 |
| PX | CN 119833708 A (CONTEMPORARY AMPEREX TECHNOLOGY CO., LTD.) 15 April 2025 (2025-04-15) claims 1-33 | 1-33 |
| A | JP 2016167439 A (SUMITOMO METAL MINING CO., LTD.) 15 September 2016 (2016-09-15) entire document | 1-33 |
| A | CN 112447966 A (CONTEMPORARY AMPEREX TECHNOLOGY CO., LTD.) 05 March 2021 (2021-03-05) entire document | 1-33 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 June 2025** | **03 July 2025** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2025/095444**

**C. DOCUMENTS CONSIDERED TO BE RELEVANT**

| Category* | Citation of document, with indication, where appropriate, of the relevant passages | Relevant to claim No. |
|---|---|---|
| A | CN 117096339 A (CONTEMPORARY AMPEREX TECHNOLOGY CO., LTD.) 21 November 2023 (2023-11-21)<br>entire document | 1-33 |
| A | CN 117613210 A (BEIJING EASPRING MATERIAL TECHNOLOGY CO., LTD.) 27 February 2024 (2024-02-27)<br>entire document | 1-33 |
| A | CN 114256443 A (CONTEMPORARY AMPEREX TECHNOLOGY CO., LTD.) 29 March 2022 (2022-03-29)<br>entire document | 1-33 |
| A | WO 2024144160 A1 (LG ENERGY SOLUTION LTD.) 04 July 2024 (2024-07-04)<br>entire document | 1-33 |

Form PCT/ISA/210 (second sheet) (July 2022)

**INTERNATIONAL SEARCH REPORT**
**Information on patent family members**

International application No.
**PCT/CN2025/095444**

| Patent document cited in search report | Publication date (day/month/year) | Patent family member(s) | Publication date (day/month/year) |
|---|---|---|---|
| CN 113363497 A | 07 September 2021 | CN 113363497 B | 30 June 2023 |
| CN 119833708 A | 15 April 2025 | None | |
| JP 2016167439 A | 15 September 2016 | US 2018047977 A1 | 15 February 2018 |
| | | US 10854873 B2 | 01 December 2020 |
| | | KR 20170125074 A | 13 November 2017 |
| | | KR 102034270 B1 | 18 October 2019 |
| | | EP 3267517 A1 | 10 January 2018 |
| | | EP 3267517 A4 | 09 January 2019 |
| | | EP 3267517 B1 | 30 April 2025 |
| | | JP 6555636 B2 | 07 August 2019 |
| | | WO 2016140207 A1 | 09 September 2016 |
| | | CN 107408690 A | 28 November 2017 |
| | | CN 107408690 B | 29 January 2021 |
| CN 112447966 A | 05 March 2021 | WO 2021042981 A1 | 11 March 2021 |
| | | EP 3944379 A1 | 26 January 2022 |
| | | EP 3944379 A4 | 08 June 2022 |
| | | US 2022185698 A1 | 16 June 2022 |
| | | EP 3944379 B1 | 12 February 2025 |
| CN 117096339 A | 21 November 2023 | None | |
| CN 117613210 A | 27 February 2024 | CN 117613210 B | 13 September 2024 |
| | | WO 2025086593 A1 | 01 May 2025 |
| CN 114256443 A | 29 March 2022 | WO 2022062745 A1 | 31 March 2022 |
| | | CN 116072816 A | 05 May 2023 |
| | | EP 4203106 A1 | 28 June 2023 |
| | | US 2023223523 A1 | 13 July 2023 |
| WO 2024144160 A1 | 04 July 2024 | KR 20240102897 A | 03 July 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2024109275446

### Non-patent literature cited in the description

- **XIE et al.** *Solid State Ionics*, 2007, vol. 178, 1218-1224
- **YANG et al.** *Electrochimica Acta*, 2012, vol. 66, 88-93